# EUROPÄISCHE PATENTANMELDUNG

(11) **EP 3 556 450 A1**
(43) Veröffentlichungstag der Anmeldung: **23.10.2019**
(21) Anmeldenummer: 19176604.7
(22) Anmeldetag: 23.10.2014
(51) Int. Cl.: B01D 46/00, B05B 14/43

(54) **FILTERANLAGE UND LACKIERANLAGE**

(30) Priorität: 04.11.2013 DE 102013222301; 10.07.2014 DE 202014103177 U
(62) Teilanmeldung aus: 14789261.6
(71) Anmelder: Dürr Systems AG, 74321 Bietigheim-Bissingen (DE)
(72) Erfinder: Wieland, Dietmar, 71336 Waiblingen (DE); Jost, Jürgen, 71679 Asperg (DE); Baitinger, Michael, 71672 Marbach (DE); Schöttle, Frank, 70839 Gerlingen (DE); Hammen, Alexander, 74354 Besigheim (DE)
(74) Vertreter: Hoeger, Stellrecht & Partner Patentanwälte mbB

(57) **Zusammenfassung**

Um eine Filteranlage zum Abscheiden von Verunreinigungen aus einem Verunreinigungen enthaltenden Rohgasstrom zu schaffen, welche einfach aufgebaut und effizient betreibbar ist, wird vorgeschlagen, dass die Filteranlage Folgendes umfasst: eine Grundkonstruktion, durch welche der Rohgasstrom hindurchführbar ist und welche mindestens eine Filtermodulaufnahme zur Aufnahme mindestens eines Filtermoduls umfasst, und mindestens ein Filtermodul, welches wahlweise an und/oder in der mindestens einen Filtermodulaufnahme anordenbar oder von und/oder aus derselben entfernbar ist, wobei das mindestens eine Filtermodul mehrere Filterelementaufnahmen zur Aufnahme mehrerer voneinander unabhängiger Filterelemente umfasst.

## Beschreibung

Die vorliegende Erfindung betrifft eine Filteranlage zum Abscheiden von Verunreinigungen aus einem Verunreinigungen enthaltenden Rohgasstrom.

Eine solche Filteranlage ist beispielsweise aus der WO 2010/069407 A1 bekannt.

Der vorliegenden Erfindung liegt die Aufgabe zugrunde, eine Filteranlage zum Abscheiden von Verunreinigungen bereitzustellen, welche einfach aufgebaut und effizient betreibbar ist.

Diese Aufgabe wird erfindungsgemäß durch eine Filteranlage zum Abscheiden von Verunreinigungen aus einem Verunreinigungen enthaltenden Rohgasstrom gelöst, wobei die Filteranlage Folgendes umfasst:
eine Grundkonstruktion, durch welche der Rohgasstrom hindurchführbar ist und welche mindestens eine Filtermodulaufnahme zur Aufnahme mindestens eines Filtermoduls umfasst, und
mindestens ein Filtermodul, welches wahlweise in mindestens eine Filtermodulaufnahme einbringbar oder aus derselben entfernbar ist,
wobei das mindestens eine Filtermodul mehrere Filterelementaufnahmen zur Aufnahme mehrerer voneinander unabhängiger Filterelemente umfasst.

Dadurch, dass die erfindungsgemäße Filteranlage eine Grundkonstruktion umfasst, welche eine Filtermodulaufnahme zur Aufnahme mindestens eines Filtermoduls umfasst, kann die Filteranlage einfach aufgebaut und effizient nutzbar sein. Insbesondere kann hierdurch ein einfacher und effizienter Austausch von Filterelementen der Filteranlage ermöglicht werden, wodurch wartungsbedingte Ruhezeiten der Filteranlage minimiert werden können.

Unter voneinander unabhängigen Filterelementen sind in dieser Beschreibung insbesondere einzeln und/oder unabhängig voneinander austauschbare Filterelemente zu verstehen.

Vorzugsweise ist jedem Filterelement eine Filterelementaufnahme zugeordnet, so dass einzelne Filterelemente vorzugsweise in einem betriebsbereiten Einbauzustand verbleiben können, während ein oder mehrere weitere Filterelemente aus den zugehörigen Filterelementaufnahmen entfernt und durch frische Filterelemente ersetzt werden.

Vorzugsweise sind mehrere Filterelemente Bestandteil einer Filtervorrichtung des Filtermoduls.

Insbesondere kann vorgesehen sein, dass mehrere Filterelemente Bestandteil einer Filtervorrichtung des Filtermoduls sind und in einem Filterbetrieb der Filteranlage parallel zueinander mit dem zu reinigenden Rohgasstrom durchströmbar sind.

Günstig kann es sein, wenn das mindestens eine Filtermodul mehrere Filtervorrichtungen umfasst, welche in einem Filterbetrieb der Filteranlage nacheinander mit dem zu reinigenden Rohgasstrom durchströmbar sind.

Die Filtervorrichtungen bilden dann vorzugsweise mehrere bezüglich einer Durchströmungsrichtung hintereinander geschaltete Filterstufen.

Bei einer Ausgestaltung der Erfindung ist vorgesehen, dass das mindestens eine Filtermodul eine Vorfiltervorrichtung, eine Hauptfiltervorrichtung und/oder eine Nachfiltervorrichtung umfasst, welche in einem Filterbetrieb der Filteranlage vorzugsweise mit zumindest einem Teilstrom des Rohgasstroms nacheinander durchströmbar sind.

Vorteilhaft kann es sein, wenn das mindestens eine Filtermodul als ein verfahrbarer und/oder verschiebbarer Transportwagen ausgebildet ist.

Ein solcher Transportwagen kann beispielsweise eine Rollenvorrichtung, insbesondere mehrere Transportrollen, umfassen, mittels welcher der Transportwagen einfach und leichtgängig auf einem Boden verschiebbar ist.

Es kann vorgesehen sein, dass das mindestens eine Filtermodul und/oder die mindestens eine Filtermodulaufnahme eine Führungsvorrichtung zum Führen, Bewegen und/oder Arretieren des mindestens einen Filtermoduls relativ zu der mindestens einen Filtermodulaufnahme umfasst.

Die Führungsvorrichtung dient insbesondere zur gezielten Zuführung und/oder Arretierung des mindestens einen Filtermoduls in einer Filterstellung des Filtermoduls, das heißt in einer Stellung des Moduls, in welcher das Filtermodul in einem Filterbetrieb der Filteranlage angeordnet ist, um Verunreinigungen aus dem Rohgasstrom abzuscheiden.

Die Führungsvorrichtung kann beispielsweise eine Schienenführung und/oder eine Rollenführung umfassen.

Beispielsweise kann eine Teleskopschienenführung der Führungsvorrichtung vorgesehen sein.

Günstig kann es sein, wenn das mindestens eine Filtermodul mittels der Führungsvorrichtung aus einer Filterstellung des Filtermoduls in eine Wechselstellung des Filtermoduls und/oder aus der Wechselstellung des Filtermoduls in die Filterstellung des Filtermoduls führbar und/oder bewegbar ist.

In der Wechselstellung des Filtermoduls ist insbesondere ein Austausch von Filterelementen des Filtermoduls möglich, beispielsweise um verunreinigte Filterelemente durch frische Filterelemente zu ersetzen.

Ferner kann vorgesehen sein, dass in der Wechselstellung des Filtermoduls das gesamte Filtermodul durch ein weiteres Filtermodul austauschbar ist.

Insbesondere kann vorgesehen sein, dass das Filtermodul in der Wechselstellung von der Führungsvorrichtung entfernbar und durch ein anderes Filtermodul austauschbar ist.

Bei einer Ausgestaltung der Erfindung ist vorgesehen, dass die Grundkonstruktion mindestens eine verschließbare Zugangsöffnung umfasst, durch welche ein Innenraum der mindestens einen Filtermodulaufnahme zum Einbringen und/oder zum Entfernen des mindestens einen Filtermoduls von außerhalb der Filteranlage zugänglich ist.

Insbesondere kann vorgesehen sein, dass das mindestens eine Filtermodul durch die mindestens eine verschließbare Zugangsöffnung in die mindestens eine Filtermodulaufnahme einbringbar und/oder aus der mindestens einen Filtermodulaufnahme entfernbar ist.

Günstig kann es sein, wenn jede Filtermodulaufnahme der Aufnahme eines einzigen Filtermoduls dient.

Ferner kann es günstig sein, wenn jeder Filtermodulaufnahme eine Zugangsöffnung, insbesondere eine separate Zugangsöffnung, zugeordnet ist.

Eine Zugangsöffnung kann beispielsweise eine verschließbare Türe sein, insbesondere in einer Außenwandung der Grundkonstruktion der Filteranlage.

Bei einer Ausgestaltung der Erfindung kann vorgesehen sein, dass die mindestens eine Filtermodulaufnahme mindestens eine Ventilvorrichtung zum wahlweisen Öffnen oder Schließen einer Einlassöffnung der Filtermodulaufnahme und/oder einer Auslassöffnung der Filtermodulaufnahme umfasst. Durch die Einlassöffnung der Filtermodulaufnahme ist vorzugsweise zumindest ein Teil des Rohgasstroms der Filtermodulaufnahme zuführbar.

Durch die Auslassöffnung der Filtermodulaufnahme ist vorzugsweise ein Gasstrom, insbesondere ein mittels der Filterelemente gereinigter Gasstrom, aus der Filtermodulaufnahme abführbar.

Die mindestens eine Ventilvorrichtung kann beispielsweise als Klappe oder Jalousie in einer Wandung, insbesondere Deckenwandung und/oder Seitenwandung, einer Filtermodulaufnahme ausgebildet sein.

Es kann vorgesehen sein, dass die Filteranlage mehrere bezüglich einer vertikalen Längsmittelebene der Filteranlage einander gegenüberliegend angeordnete Filtermodulaufnahmen und/oder Filtermodule umfasst.

Insbesondere sind die Filtermodulaufnahmen und/oder Filtermodule vorzugsweise spiegelsymmetrisch bezüglich der vertikalen Längsmittelebene angeordnet und/oder ausgebildet.

Ferner kann vorgesehen sein, dass die Filteranlage mehrere in einer Längsrichtung der Filteranlage, insbesondere in einer Förderrichtung einer Fördervorrichtung einer Lackieranlage, aufeinanderfolgend angeordnete Filtermodulaufnahmen und/oder Filtermodule umfasst.

Die in der Längsrichtung der Filteranlage aufeinanderfolgend angeordneten Filtermodulaufnahmen und/oder Filtermodule bilden vorzugsweise eine parallel zu einer (noch zu beschreibenden) Förderrichtung verlaufende Reihe von Filtermodulaufnahmen bzw. Filtermodulen.

Die Filtermodulaufnahmen weisen vorzugsweise geschlossene seitliche Trennwandungen auf, welche insbesondere im Wesentlichen vertikal und im Wesentlichen senkrecht zur vertikalen Längsmittelebene der Filteranlage ausgerichtet sind und Innenräume von in der Längsrichtung der Filteranlage aufeinanderfolgend angeordneten Filtermodulaufnahmen fluidwirksam voneinander trennen.

Vorzugsweise umfasst die Filteranlage zwei parallel zueinander und parallel zur Längsrichtung angeordnete Reihen von Filtermodulaufnahmen und/oder zwei parallel zueinander und parallel zur Längsrichtung angeordnete Reihen von Filtermodulen.

Es kann vorgesehen sein, dass die Filteranlage mehrere Filtermodulaufnahmen umfasst, welche unabhängig voneinander durchströmbare Strömungskanäle der Filteranlage bilden.

Die Filteranlage, insbesondere die Filtermodulaufnahmen, weist vorzugsweise Ventilvorrichtungen auf, mittels welchen einzelne oder mehrere Strömungskanäle sperrbar oder freigebbar sind.

Vorzugsweise ist vorgesehen, dass mittels der Ventilvorrichtungen die Durchströmung des Innenraums einzelner Filtermodulaufnahmen unterbrechbar ist, um das in der Filtermodulaufnahme aufgenommene mindestens eine Filtermodul und/oder mindestens ein Filterelement ohne Beeinträchtigung durch den Rohgasstrom austauschen zu können.

Vorteilhaft kann es sein, wenn die Filteranlage mindestens einen sich zwischen mindestens zwei Filtermodulaufnahmen erstreckenden Rohgasschacht umfasst, durch welchen der Rohgasstrom, insbesondere in im Wesentlichen vertikaler Richtung (Schwerkraftrichtung), hindurchführbar und Einlassöffnungen der Filtermodulaufnahmen zuführbar ist.

Ferner kann vorgesehen sein, dass die Filteranlage mindestens einen sich zwischen mindestens zwei Filtermodulaufnahmen erstreckenden Reingaskanal umfasst, durch welchen ein Reingasstrom, der durch Abscheiden von Verunreinigungen aus dem Rohgasstrom erhältlich ist, abführbar ist.

Insbesondere kann vorgesehen sein, dass die Filteranlage mindestens einen sich zwischen mindestens zwei Filtermodulaufnahmen erstreckenden Reingas-sammelkanal umfasst, mittels welchem mehrere Reingasströme aus mehreren Filtermodulen zusammengeführt und gemeinsam abgeführt werden.

Eine effiziente Filteranlage kann auch durch einen effizienten Austausch von Filterelementen ermöglicht werden.

Die vorliegende Erfindung betrifft daher auch eine Filteranlage zum Abscheiden von Verunreinigungen aus einem Verunreinigungen enthaltenden Rohgasstrom, welche mindestens eine Filterelementaufnahme zur Aufnahme mindestens eines Filterelements und mindestens eine Wechselvorrichtung zum automatischen Austausch eines in der mindestens einen Filterelementaufnahme angeordneten stärker verunreinigten Filterelements gegen ein weniger stark verunreinigtes Filterelement umfasst.

Diese Filteranlage weist vorzugsweise ferner einzelne oder mehrere der im Zusammenhang mit den übrigen beschriebenen Filteranlagen erläuterten Merkmale und/oder Vorteile auf.

Insbesondere kann die beschriebene Wechselvorrichtung zur Weiterbildung der übrigen beschriebenen Filteranlagen verwendet werden.

Unter einem stark verunreinigten Filterelement ist in dieser Beschreibung und den beigefügten Ansprüchen insbesondere ein Filterelement zu verstehen, welches aufgrund des Filterbetriebs der Filteranlage Verunreinigungen aufgenommen hat und somit einen hohen Beladungsgrad oder Füllgrad aufweist, wodurch sich eine geringe Filterwirkung, ein hoher Strömungswiderstand, eine geringe mechanische Stabilität des Filterelements und/oder eine hohe Brandgefahr ergeben können.

Ein weniger stark verunreinigtes Filterelement ist insbesondere ein frisches Filterelement, welches nicht oder nur gering mit Verunreinigungen beladen ist und somit für einen effizienten Filterbetrieb der Filteranlage genutzt werden kann.

Zur vereinfachten Bezugnahme wird ein stark verunreinigtes Filterelement oder ein stärker verunreinigtes Filterelement nachfolgend allgemein als "verunreinigtes Filterelement" bezeichnet.

Ein weniger stark verunreinigtes Filterelement oder ein Filterelement, welches lediglich geringe oder gar keine Verunreinigungen aufweist, wird nachfolgend zur Vereinfachung als "frisches Filterelement" bezeichnet.

Die Filteranlage kann beispielsweise eine oder mehrere Wechselvorrichtungen umfassen. Insbesondere kann vorgesehen sein, dass jeder Reihe von Filtermodulaufnahmen und/oder Filtermodulen eine oder mehrere Wechselvorrichtungen zugeordnet sind.

Vorteilhaft kann es sein, wenn die Wechselvorrichtung eine Robotervorrichtung umfasst oder als eine Robotervorrichtung ausgebildet ist.

Günstig kann es sein, wenn mittels der Wechselvorrichtung mindestens ein Filtermodul aus einer Filterstellung in eine Wechselstellung und/oder aus der Wechselstellung in die Filterstellung bringbar ist.

Bei einer Ausgestaltung der Erfindung ist vorgesehen, dass eine Wechselvorrichtung mehreren Filterelementaufnahmen, mehreren Filtermodulen, mehreren Filtervorrichtungen und/oder mehreren Filterelementen zugeordnet ist, um bei Bedarf einzelne oder sämtliche Filterelemente dieser Filtervorrichtungen und/oder Filtermodule austauschen zu können.

Die Wechselvorrichtung, insbesondere eine Robotervorrichtung, ist hierzu insbesondere beweglich und/oder verfahrbar an der Filteranlage angeordnet.

Die Wechselvorrichtung kann dabei beispielsweise auf einer Rohgasseite und/oder auf einer Reingasseite, das heißt bezüglich einer Durchströmungsrichtung der Filtermodule stromaufwärts und/oder stromabwärts der Filtermodule angeordnet sein.

Es kann vorgesehen sein, dass mittels der Wechselvorrichtung insbesondere als Einweg-Filterelemente ausgebildete Filterelemente austauschbar sind.

Vorteilhaft kann es sein, wenn die Wechselvorrichtung, insbesondere die Robotervorrichtung, verfahrbar an einem integrierten Traversemodul (ITM) der Filteranlage und/oder einer (noch zu beschreibenden) Lackieranlage aufgehängt ist.

Insbesondere dann, wenn die Wechselvorrichtung, beispielsweise die Robotervorrichtung, auf einer Rohgasseite der Filteranlage angeordnet ist, kann vorgesehen sein, dass die Wechselvorrichtung eine Abdeckung, beispielsweise einen Schlauchschrumpf und/oder ein Schirmsystem, umfasst, mittels welchem die Wechselvorrichtung vor einer Verunreinigung durch die in dem Rohgasstrom enthaltenden Verunreinigungen, insbesondere Lack-Overspray, geschützt werden kann.

Günstig kann es sein, wenn die Wechselvorrichtung eine oder mehrere Aufnahmevorrichtungen zur Aufnahme von frischen oder ausgetauschten Filterelementen umfasst. Die Filterelemente können dann besonders einfach mittels der Wechselvorrichtung zu den Filterelementaufnahmen hin- oder von den Filterelementaufnahmen wegtransportiert werden.

Alternativ oder ergänzend hierzu kann vorgesehen sein, dass die Wechselvorrichtung eine Fördervorrichtung umfasst oder dass der Wechselvorrichtung eine Fördervorrichtung zugeordnet ist, mittels welcher frische Filterelemente zu der Wechselvorrichtung hin- und/oder verunreinigte Filterelemente von der Wechselvorrichtung wegtransportiert werden können.

Vorzugsweise eignet sich die Verwendung einer Wechselvorrichtung, insbesondere einer Robotervorrichtung, sowohl bei einer mittigen Rohgaszuführung (längs der vertikalen Längsmittelebene), insbesondere mittiger Kabinenluftzufuhr, als auch bei seitlicher außermittiger Rohgaszuführung.

Eine erfindungsgemäße Filteranlage eignet sich insbesondere zur Verwendung in einer Lackieranlage zum Lackieren von Werkstücken, insbesondere Fahrzeugkarosserien.

Die vorliegende Erfindung betrifft daher auch eine Lackieranlage zum Lackieren von Werkstücken, insbesondere Fahrzeugkarosserien, welche mindestens eine erfindungsgemäße Filteranlage umfasst.

Die erfindungsgemäße Lackieranlage weist vorzugsweise einzelne oder mehrere der im Zusammenhang mit einer Filteranlage beschriebenen Merkmale und/oder Vorteile auf.

Die vorliegende Erfindung betrifft ferner ein Verfahren zum Abscheiden von Verunreinigungen aus einem Verunreinigungen enthaltenden Rohgasstrom mittels einer Filteranlage.

Der Erfindung liegt diesbezüglich die Aufgabe zugrunde, ein Verfahren bereitzustellen, welches einfach und effizient durchführbar ist.

Diese Aufgabe wird erfindungsgemäß dadurch gelöst, dass das Verfahren zum Abscheiden von Verunreinigungen aus einem Verunreinigungen enthaltenden Rohgasstrom mittels einer Filteranlage Folgendes umfasst:
Zuführen des Rohgasstroms zu mehreren Filterelementen, die in Filterelementaufnahmen eines Filtermoduls angeordnet sind, wobei das Filtermodul in einer Filtermodulaufnahme der Filteranlage angeordnet ist;
Abscheiden von Verunreinigungen aus dem Rohgasstrom an den Filterelementen ;
Entnehmen des Filtermoduls aus der Filtermodulaufnahme;
Austauschen eines oder mehrerer der in den Filterelementaufnahmen angeordneten stärker verunreinigten Filterelemente gegen ein oder mehrere weniger stark verunreinigte Filterelemente;
Einbringen des Filtermoduls in die Filtermodulaufnahme.

Das erfindungsgemäße Verfahren weist vorzugsweise einzelne oder mehrere der im Zusammenhang mit der erfindungsgemäßen Filteranlage und/oder der erfindungsgemäßen Lackieranlage beschriebenen Merkmale und/oder Vorteile auf.

Ferner wird die Aufgabe dadurch gelöst, dass ein Verfahren zum Abscheiden von Verunreinigungen aus einem Verunreinigungen enthaltenden Rohgasstrom Folgendes umfasst:
Zuführen des Rohgasstroms zu mindestens einem Filterelement;
Abscheiden von Verunreinigungen aus dem Rohgasstrom an dem mindestens einen Filterelement, wodurch das mindestens eine Filterelement verunreinigt wird;
Austauschen des mindestens einen verunreinigten Filterelements gegen ein frisches Filterelement mittels einer automatischen Wechselvorrichtung.

Dieses Verfahren weist vorzugsweise einzelne oder mehrere der im Zusammenhang mit dem erfindungsgemäßen Verfahren und/oder der erfindungsgemäßen Filteranlage und/oder der erfindungsgemäßen Lackieranlage beschriebenen Merkmale und/oder Vorteile auf.

Ferner können die erfindungsgemäße Filteranlage, die erfindungsgemäße Lackieranlage und/oder das erfindungsgemäße Verfahren einzelne oder mehrere der nachfolgende beschriebenen Merkmale und/Vorteile aufweisen:
Es kann vorgesehen sein, dass ein oder mehrere Filterelemente als sogenannte Einweg-Filterelemente ausgebildet sind.

Beispielsweise kann vorgesehen sein, dass hierbei ein Hohlkörper, insbesondere aus einem nicht metallischen Material, vorgesehen ist, bei welchem in Richtung eines eintretenden Luftstroms (Rohgasstroms) aufeinanderfolgende Wände Öffnungen aufweisen, die in Durchströmungsrichtung kleiner werden. Insbesondere kann vorgesehen sein, dass mittels mindestens eines solchen Filterelements eine Vorfiltervorrichtung gebildet ist.

Ferner kann vorgesehen sein, dass mindestens ein Filterelement mehrere Abscheideelemente umfasst, welche so angeordnet sind, dass sich ein Strömungslabyrinth bildet. Die Abscheideelemente sind vorzugsweise bei geringer Beladung (Verunreinigung) durchlässig, so dass die Abscheideelemente als Abscheidefilter (Tiefenfilter) dienen können. Bei stärkerer Beladung (Verunreinigung) der Abscheideelemente dient das Filterelement dann insbesondere als ein Trägheitsfilter.

Mindestens ein Filterelement kann beispielsweise ein Fasermaterial und/oder ein Vliesmaterial umfassen oder aus einem Fasermaterial und/oder einem Vliesmaterial gebildet sein.

Günstig kann es sein, wenn mindestens ein Filterelement als ein Einwegelement, beispielsweise als ein recycelbares Einwegelement, ausgebildet ist. Beispielsweise kann vorgesehen sein, dass mindestens ein Filterelement aus nassfestem Recyclingmaterial hergestellt und zur Weiterverwendung erneut zu nassfestem Recyclingmaterial verarbeitbar ist.

Die Filteranlage kann vorzugsweise mindestens zwei, insbesondere drei oder vier, Filterstufen, das heißt bezüglich einer Strömungsrichtung hintereinander angeordnete Filtervorrichtungen, aufweisen.

Vorzugsweise sind eine Vorfiltervorrichtung, eine Hauptfiltervorrichtung, eine Nachfiltervorrichtung und/oder eine Sicherheitsfiltervorrichtung (Zusatzfiltervorrichtung; Polizeifiltervorrichtung) vorgesehen.

Die Sicherheitsfiltervorrichtung ist vorzugsweise fest in die Grundkonstruktion integriert, während die Vorfiltervorrichtung, die Hauptfiltervorrichtung und/oder die Nachfiltervorrichtung vorzugsweise in bewegbaren Filtermodulen angeordnet sind.

Die Filtermodule sind vorzugsweise abgedeckt, insbesondere mittels Deckenwandungen der Filtermodulaufnahmen. Auf diese Weise kann verhindert werden, dass aus einer Lackierkabine der Lackieranlage herabtropfende oder herabfallende Verunreinigungen, insbesondere Lack und/oder Lösemittel, die Filtermodule verunreinigen.

Günstig kann es sein, wenn die Filtermodulaufnahme und/oder das Filtermodul eine Bypassvorrichtung für eine Vorfiltervorrichtung umfasst.

Auf diese Weise kann vorzugsweise wahlweise, insbesondere mittels einer Ventilvorrichtung (Klappenvorrichtung) einstellbar, ein Rohgasstrom zunächst durch die Vorfiltervorrichtung hindurchgeführt oder an der Vorfiltervorrichtung vorbeigeführt werden, bevor dieser der Hauptfiltervorrichtung zugeführt wird. Vorteilhaft kann es sein, wenn die Bypassvorrichtung in einem Randbereich der Filteranlage angeordnet ist, so dass lediglich gering verunreinigtes Rohgas durch die Bypassvorrichtung der Hauptfiltervorrichtung zuführbar ist.

Stärker verunreinigtes Rohgas, insbesondere in einem Mittelbereich, beispielsweise im Bereich der vertikalen Längsmittelebene der Filteranlage und/oder der Lackieranlage, wird vorzugsweise durch die Vorfiltervorrichtung hindurchgeführt und erst anschließend der Hauptfiltervorrichtung zugeführt.

Es kann vorgesehen sein, dass das mindestens eine Filtermodul, insbesondere ein als Transportwagen ausgebildetes Filtermodul, ein Auffangelement, beispielsweise eine Auffangwanne, umfasst, mittels welchem von den Filterelementen herabfallende Verunreinigungen auffangbar sind. Eine unerwünschte Verunreinigung eines Bodens der Filteranlage kann hierdurch vorzugsweise verhindert werden.

Zum Transport eines oder mehrerer Filtermodule kann vorzugsweise eine Transportvorrichtung vorgesehen sein.

Beispielsweise kann die Transportvorrichtung als ein Hubwagen ausgebildet sein.

Günstig kann es sein, wenn die Transportvorrichtung, insbesondere der Hubwagen, ein oder mehrere Auffangelemente, insbesondere Auffangwannen, zum Auffangen von von den Filterelementen herabfallenden Verunreinigungen umfasst.

Günstig kann es sein, wenn das Filtermodul mittels einer Sicherungsvorrichtung an der Transportvorrichtung festlegbar ist, insbesondere um ein Kippen des Filtermoduls während des Transports desselben zu verhindern.

Ferner kann vorgesehen sein, dass ein, insbesondere automatischer, Wechsel einzelner Filterelemente direkt in der Filteranlage durchgeführt wird. Das Filtermodul kann dann insbesondere stationär sein.

Eine Abdichtung des Filtermoduls gegenüber der Filtermodulaufnahme und/oder der Grundkonstruktion erfolgt vorzugsweise mittels einer oder mehrerer Flanschverbindungen, beispielsweise mittels eines oder mehrerer Winkelflansche.

Insbesondere kann ein Winkelflansch mit im Wesentlichen P-förmigem Querschnitt vorgesehen sein, welcher zur Abdichtung gegen ein Dichtelement, insbesondere ein Moosgummi-Element, pressbar ist.

Vorzugsweise wird das Filtermodul zur Abdichtung gegenüber der Filtermodulaufnahme gegen einen oder mehrere Flansche geschoben und in dieser Stellung arretiert.

Ein zur Abdichtung erforderlicher Anpressdruck wird vorzugsweise mittels einer Führungsvorrichtung, insbesondere einer Teleskopschienenvorrichtung, aufgebracht.

Alternativ oder ergänzend hierzu kann vorgesehen sein, dass das Filtermodul zur Abdichtung der Flanschverbindung in einer gewünschten Filterstellung mittels einer Arretiervorrichtung arretiert wird. Eine solche Arretiervorrichtung (Verriegelungseinrichtung) kann beispielsweise an einer Kabinenwandung, insbesondere einer Seitenwandung der Filtermodulaufnahme, aufgeprägt oder eingeprägt sein.

Zur Bestimmung eines Wechselzeitpunkts mindestens eines Filterelements kann eine statistische Auswertung herangezogen werden. Beispielsweise kann eine Overspray-Erfassung in einer Lackiervorrichtung genutzt werden, um auf die Beladung der Filterelemente in unterschiedlichen Bereichen der Filteranlage zu schließen und somit den Wechselzeitpunkt zu bestimmen.

Alternativ oder ergänzend hierzu kann die Anzahl der lackierten Werkstücke, insbesondere Fahrzeugkarosserien, beispielsweise mittels eines Skid Counters, ermittelt werden, um auf die Beladung einzelner Filterelemente oder einzelner Filtermodule zu schließen.

Ferner kann aus einer Volumenstromerfassung, beispielsweise mittels einer Druckmessung, einer Messblende und/oder eines Hitzdrahts, auf den Füllgrad (Beladungsgrad; Grad der Verunreinigung) der Filterelemente geschlossen werden.

Auch ist es denkbar, die Masse, insbesondere das Gewicht, der Filtermodule auszuwerten, um auf einen Wechselzeitpunkt zu schließen.

Ein Filtermodul kann vorzugsweise über die Reingasseite oder über die Rohgasseite desselben aus der Filterstellung in die Wechselstellung gebracht werden.

In der Filterstellung des Filtermoduls ist dieses vorzugsweise an einer Eintrittsseite und/oder an einer Austrittsseite mittels einer Flanschverbindung gegenüber der Filtermodulaufnahme abgedichtet.

Die Filtermodule und/oder die Filtermodulaufnahmen sind vorzugsweise oberhalb, insbesondere direkt über, Sicherungsfiltervorrichtungen oder Zusatzfiltervorrichtungen angeordnet.

Es kann jedoch auch vorgesehen sein, dass die Filtermodule und/oder die Filtermodulaufnahmen unterhalb, insbesondere direkt unter, Sicherungsfiltervorrichtungen oder Zusatzfiltervorrichtungen angeordnet sind.

Insbesondere dann, wenn die Filtermodule und Filtermodulaufnahmen auf einem Boden angeordnet sind, auf welchem die gesamte Filteranlage und/oder Lackieranlage aufbaut, kann die von der Grundkonstruktion aufzunehmende maximale Traglast reduziert und somit die Grundkonstruktion einfacher und kostengünstiger gestaltet werden. Insbesondere kann hierdurch eine oberhalb dieses Bodens angeordnete Begehung oder ein mittels der Grundkonstruktion gebildeter weiterer Boden für ein geringeres Gewicht ausgelegt werden.

Es kann vorgesehen sein, dass die Filtermodule in mindestens einer senkrecht zur vertikalen Längsmittelebene der Filteranlage verlaufenden Richtung durchströmt werden.

Alternativ oder ergänzend hierzu kann vorgesehen sein, dass die Filtermodule in mindestens einer parallel zur vertikalen Längsmittelebene verlaufenden Richtung durchströmt werden.

Die Durchströmungsrichtungen sind dabei vorzugsweise im Wesentlichen horizontal oder vertikal ausgerichtet.

Ein Filterelement einer Vorfiltervorrichtung ist vorzugsweise als ein Trägheitsfilter mit einer einfachen oder mehrfachen Strömungsumlenkung ausgebildet. Das Filterelement kann beispielsweise aus Karton, Kunststoff, Keramik und/oder Metall gebildet sein oder Karton, Kunststoff, Keramik und/oder Metall umfassen. Insbesondere ist das Filterelement aus Recyclingmaterial gebildet.

Vorteilhaft kann es sein, wenn ein Filterelement einer Vorfiltervorrichtung zumindest näherungsweise dieselben Ausmaße in horizontaler Richtung aufweist, wie die Hauptfiltervorrichtung.

Insbesondere kann vorgesehen sein, dass ein Hohlkörper, beispielsweise ein Rahmen, der Hauptfiltervorrichtung zur Aufnahme und/oder Ausbildung der Vorfiltervorrichtung genutzt wird. Vorzugsweise müssen dann lediglich noch die Filterelemente der Vorfiltervorrichtung in dieselbe eingesetzt werden.

Die Hauptfiltervorrichtung umfasst vorzugsweise ein oder mehrere Filterelemente, welche aus Karton, Papier, Kunststoff, Keramik und/oder Metall gebildet sind oder Karton, Papier, Kunststoff, Keramik und/oder Metall umfassen.

Insbesondere ist mindestens ein Filterelement der Hauptfiltervorrichtung teilweise oder vollständig aus Einwegmaterial, recyceltem Material und/oder recycelbarem Material gebildet.

Mindestens ein Filterelement der Hauptfiltervorrichtung ist vorzugsweise ein Trägheitsabscheider, wobei insbesondere mehrere in Strömungsrichtung hintereinander angeordnete Segmente vorgesehen sind, welche im Wesentlichen unabhängig voneinander austauschbar sind, so dass insbesondere stärker verschmutzte stromaufwärts angeordnete Segmente häufiger gewechselt werden können, als die stromabwärts angeordneten Segmente.

Ein oder mehrere Filterelemente der Nachfiltervorrichtung umfassen vorzugsweise ein Fasermaterial und/oder ein Vliesmaterial, beispielsweise in Form eines Mattenfilters.

Insbesondere dann, wenn ein Umluftbetrieb der Lackieranlage vorgesehen ist, kann eine Zusatzfiltervorrichtung und/oder Sicherheitsfiltervorrichtung (Polizeifilter) vorgesehen sein.

Filterelemente der Sicherheitsfiltervorrichtung und/oder Zusatzfiltervorrichtung sind vorzugsweise Taschenfilterelemente oder Kassettenfilterelemente.

Günstig kann es sein, wenn Wände zwischen den Filtermodulen als Brandschutzwände ausgebildet sind.

Im Falle eines Brandes kann dann vorzugsweise eine wandseitige Einlassöffnung einer Filtermodulaufnahme und/oder eines Filtermoduls beispielsweise über eine Klappe verschlossen werden.

Ferner kann im Brandfall vorzugsweise eine abluftseitige Klappe einer Filtermodulaufnahme und/oder eines Filtermoduls geschlossen werden.

Insbesondere dann, wenn ein Rohgasschacht vorgesehen ist, mittels welchem der Rohgasstrom längs der vertikalen Längsmittelebene mittig in der Filteranlage geführt wird, kann aus Brandschutzgründen vorgesehen sein, dass der Rohgasschacht mittels eines Schiebers oder einer Klappe verschließbar ist.

Insbesondere kann hierdurch vorzugsweise ein Einlass der Filtermodulaufnahmen und/oder der Filtermodule geschlossen werden.

Vorzugsweise weist die Filteranlage eine Segmentbauweise auf.

Es kann vorgesehen sein, dass einzelne Abschnitte des Rohgasschachts abdeckbar oder verschließbar sind. Insbesondere im Falle eines Filterelementwechsels und/oder Filtermodulwechsels kann dann vorzugsweise derjenige Bereich des Rohgasschachts, an welchen sich das zu wechselnde Filterelement und/oder Filtermodul anschließt, abgedeckt oder verschlossen werden, um eine unerwünschte Verunreinigung während des Wechselvorgangs zu verhindern oder zumindest zu reduzieren.

Es kann vorgesehen sein, dass verunreinigte Filterelemente an einer Wechselstation entnommen und beispielsweise über eine Rutsche oder eine Öffnung auf der Arbeitsebene einem Sammelbehälter zugeführt werden.

Der Sammelbehälter kann beispielsweise als ein Sammel- und/oder Presscontainer ausgebildet sein, um eine Vielzahl von verunreinigten Filterelementen aufnehmen zu können.

Vorzugsweise werden an der Wechselstation neue, leere, teils befüllte, aufbereitete und/oder frische Filterelemente zugeführt, insbesondere in die Filterelementaufnahmen eingeführt.

Die Wechselstation ist beispielsweise der Bereich, in welchem mindestens ein Filtermodul angeordnet ist, wenn dieses in der Wechselstellung vorliegt.

Es kann jedoch auch vorgesehen sein, dass die Wechselstation eine Stelle ist, zu welcher das mindestens eine Filtermodul mittels der Transportvorrichtung transportierbar ist.

Es kann vorgesehen sein, das die Filterelemente, insbesondere die verunreinigten Filterelemente, vor einem Pressen derselben, insbesondere in dem Presscontainer, verpackt werden, beispielsweise mittels eines Kunststoffsacks. Auf diese Weise kann eine Verschmutzung des Sammel- und/oder Presscontainers verhindert werden.

Insbesondere dann, wenn die Filterelemente oder Filtermodule unterschiedliche Verunreinigungsgrade (Beladungsgrade) aufweisen, können sich unerwünschte Strömungen, insbesondere Längsströmungen, in der Filteranlage und/oder der Lackierkabine der Lackieranlage ergeben. Derartige unerwünschte Strömungen können beispielsweise wie folgt verringert oder vermieden werden:
Eine abluftseitige Ventilvorrichtung (Klappe) des Filtermoduls oder der Filtermodulaufnahme gleicht vorzugsweise den mit ansteigender Verunreinigung ansteigenden Druckverlust des Filtermoduls dadurch aus, dass diese sich weiter öffnet. Mittels der Ventilvorrichtung, welche insbesondere als Drossel dient, kann somit vorzugsweise ein Gesamtdruckverlust durch Anpassung des Drosselgrades (Klappenstellung) konstant gehalten werden.

Die Ventilvorrichtung kann vorzugsweise stufenförmig oder stufenlos, insbesondere abhängig von einem Beladungsgrad der Filterelemente und/oder des Filtermoduls, eingestellt, insbesondere geöffnet und/oder geschlossen, werden. Zur Bestimmung des Beladungsgrads und somit der Öffnung der Ventilvorrichtung wird vorzugsweise auf die Maßnahmen zur Bestimmung des Wechselzeitpunkts für die Filterelemente zurückgegriffen.

Alternativ oder ergänzend hierzu kann vorgesehen sein, dass mittels einer Ventilatorvorrichtung, insbesondere eines Lüfters, beispielsweise eines Axiallüfters und/oder eines Radiallüfters, insbesondere direkt an einer Austrittsseite der Filtermodulaufnahme der durch die Filtermodulaufnahme strömende Gasstrom beschleunigt wird. Insbesondere kann mittels der Ventilatorvorrichtung der Druckverlust, welcher mit zunehmendem Beladungsgrad ansteigt, ausgeglichen werden.

Die Ventilatorvorrichtung wird insbesondere so eingestellt, dass der Volumenstrom des durch die Filtermodulaufnahme und/oder durch das Filtermodul hindurchgeführten Gasstroms stets im Wesentlichen konstant ist.

Zur Steuerung und/oder Regelung der Leistung der Ventilatorvorrichtung kann vorzugsweise auf die Maßnahmen zur Bestimmung des Wechselzeitpunkts der Filterelemente zurückgegriffen werden.

Insbesondere zur Automatisierung der Filteranlage kann vorgesehen sein, dass einzelne oder mehrere Elemente oder Module, insbesondere Filterelemente und/oder Filtermodule, maschinell bewegbar und/oder verfahrbar sind.

Beispielsweise kann vorgesehen sein, dass die Filtermodule mittels einer Führungsvorrichtung maschinell bewegbar sind. Die Führungsvorrichtung umfasst hierzu vorzugsweise eine Antriebsvorrichtung, beispielsweise einen Pneumatikzylinder oder Hydraulikzylinder.

Zum Transport der Filtermodule, insbesondere zum Entfernen und/oder Zuführen der Filtermodule von bzw. zu einer Aufnahmeposition (Wechselstellung) der Führungsvorrichtung, kann beispielsweise ein Hängeförderer und/oder ein fahrerloses Transportsystem, insbesondere ein fahrerloses bodengebundenes Transportsystem, vorgesehen sein.

Günstig kann es sein, wenn mindestens eine Filtermodulaufnahme an einer Außenwandung der Filteranlage, insbesondere einer Außenwandung der Grundkonstruktion der Filteranlage, angeordnet und/oder in die Außenwandung der Filteranlage, insbesondere in die Außenwandung der Grundkonstruktion der Filteranlage, integriert ist.

Dabei kann vorgesehen sein, dass mindestens ein Filtermodul durch Anlegen desselben an die Außenwandung an der mindestens einen Filtermodulaufnahme anordenbar ist.

Beispielsweise kann vorgesehen sein, dass ein Filtermodul flächig an die Außenwandung anlegbar ist.

Vorzugsweise umfassen die Filtermodulaufnahme, insbesondere die Außenwandung, und das Filtermodul jeweils eine Einlassöffnung und eine Auslassöffnung.

Eine Einlassöffnung des Filtermoduls und eine Auslassöffnung des Filtermoduls sind vorzugsweise durch Anlegen des Filtermoduls an die Außenwandung passend an eine hierzu korrespondierende Einlassöffnung und eine hierzu korrespondierende Auslassöffnung der Außenwandung anlegbar.

Eine Abdichtung zwischen der Außenwandung und dem Filtermodul erfolgt vorzugsweise mittels eines oder zweier Flansche oder Flanschbereiche. Vorzugsweise durchströmt ein Gasstrom ein Gehäuse, insbesondere ein geschlossenes Gehäuse, eines Filtermoduls, vorzugsweise ohne das Filtermodul selbst zu umströmen.

Die Außenwandung der Filteranlage, insbesondere die Außenwandung der Grundkonstruktion der Filteranlage, weist vorzugsweise eine oder mehrere Einbuchtungen auf, in welchen ein oder mehrere Filtermodule anordenbar sind.

Vorzugsweise sind zwei bezüglich der vertikalen Längsmittelebene der Filteranlage einander gegenüberliegend angeordnete und im Wesentlichen spiegelsymmetrisch zueinander ausgebildete Einbuchtungen in den bezüglich der vertikalen Längsmittelebene aneinander gegenüberliegend angeordneten Außenwandungen der Filteranlage vorgesehen.

Die Einbuchtungen erstrecken sich vorzugsweise längs einer Förderrichtung einer Fördervorrichtung der Lackieranlage.

Vorzugsweise sind mehrere Filtermodule in einer Einbuchtung aufnehmbar.

Türen und/oder Zwischenwände zwischen einzelnen Filtermodulen sind vorzugsweise entbehrlich.

Es kann vorgesehen sein, dass ein Filtermodul ein Gehäuse umfasst, welches eine Zugangsöffnung, beispielsweise eine Türe, umfasst.

Die Zugangsöffnung, insbesondere die Türe, ist beispielsweise in einer Rückseite des Gehäuses des Filtermoduls angeordnet.

Die Rückseite ist insbesondere eine im Filterbetrieb der Filteranlage von einer Umgebung der Filteranlage zugängliche Seite des Gehäuses des Filtermoduls. Insbesondere ist die Rückseite eine einer Vorderseite des Filtermoduls abgewandte Seite, wobei die Vorderseite vorzugsweise diejenige Seite des Gehäuses des Filtermoduls ist, in welcher eine Einlassöffnung und/oder eine Auslassöffnung des Filtermoduls angeordnet sind.

Die Vorderseite ist insbesondere diejenige Seite des Filtermoduls, mit welcher das Filtermodul an der Filtermodulaufnahme anordenbar ist.

Insbesondere zum Wechseln einzelner oder mehrerer Filterelemente von Filtervorrichtungen eines Filtermoduls kann vorgesehen sein, dass diese Filterelemente durch eine Zugangsöffnung, insbesondere eine Türe, in dem Gehäuse des Filtermoduls hindurch zugänglich sind.

Alternativ oder ergänzend hierzu kann vorgesehen sein, dass Gehäuseteile des Gehäuses des Filtermoduls entfernbar sind.

Ferner kann alternativ oder ergänzend hierzu vorgesehen sein, dass Filterelemente, beispielsweise ein Nachfilterelement einer Nachfiltervorrichtung, als Einschubelemente zum, insbesondere seitlichen, Einschieben in das Filtermodul ausgebildet sind.

Vorteilhaft kann es sein, wenn die Hauptfiltervorrichtung und/oder die Nachfiltervorrichtung so ausgebildet sind, dass eine Nachfiltervorrichtung, insbesondere ein oder mehrere Filterelemente der Nachfiltervorrichtung, bei zumindest teilweise demontierter Hauptfiltervorrichtung durch die Hauptfiltervorrichtung hindurch zugänglich und/oder austauschbar sind.

Trotz einer geringeren Anzahl an Wänden, insbesondere Zwischenwänden zwischen einzelnen Filtermodulen, kann vorzugsweise eine Brandausbreitungsgeschwindigkeit gering gehalten werden.

Bewegte Komponenten, insbesondere eine Führungsvorrichtung der Filteranlage, sind vorzugsweise außerhalb eines im Betrieb der Filteranlage mit einem Gasstrom durchströmten Bereichs angeordnet. Hierdurch kann die Filteranlage robust ausgebildet und zuverlässig betrieben werden.

Vorzugsweise sind durch das Anlegen von Filtermodulen an Außenwandungen der Filteranlage mehr Filtermodule verwendbar, als wenn auf gleicher Länge der Filteranlage für jedes Filtermodul eine separate Filtermodulaufnahme zur Aufnahme des Filtermoduls in einem separaten Innenraum vorgesehen wäre. Die Filtermodule können hierdurch vorzugsweise näher aneinanderrücken. Hierdurch kann vorzugsweise eine Filterfläche und/oder eine Filterstandzeit erhöht werden.

Zudem kann vorzugsweise ein geringerer Platzbedarf beim Wechseln von Filtermodulen und/oder Filterelementen realisiert werden.

Bei einer Ausgestaltung der Erfindung kann vorgesehen sein, dass eine oder mehrere Einlassöffnungen einer Filtermodulaufnahme und/oder eine oder mehrere Einlassöffnungen eines Filtermoduls bezüglich der Schwerkraftrichtung unterhalb, insbesondere direkt unter, einer oder mehreren Auslassöffnungen der Filtermodulaufnahme und/oder einer oder mehreren Auslassöffnungen des Filtermoduls angeordnet sind.

Alternativ oder ergänzend hierzu kann vorgesehen sein, dass eine oder mehrere Einlassöffnungen einer Filtermodulaufnahme und/oder eine oder mehrere Einlassöffnungen eines Filtermoduls bezüglich der Schwerkraftrichtung oberhalb, insbesondere direkt über, einer oder mehreren Auslassöffnungen der Filtermodulaufnahme und/oder einer oder mehreren Auslassöffnungen des Filtermoduls angeordnet sind.

Es kann vorgesehen sein, dass eine oder mehrere Einlassöffnungen einerseits und eine oder mehrere Auslassöffnungen andererseits in derselben Wandung, beispielsweise in einer Vorderseite eines Filtermoduls, oder in voneinander verschiedenen Wandungen angeordnet sind.

Die der vorliegenden Erfindung zugrunde liegende Aufgabe wird alternativ oder ergänzend dadurch gelöst, dass die Filteranlage zum Abscheiden von Verunreinigungen aus einem Verunreinigungen enthaltenen Rohgasstrom Folgendes umfasst:
eine Grundkonstruktion, durch welche der Rohgasstrom hindurchführbar ist; eine Feuerschutzvorrichtung, mittels welcher ein Brand in der Filteranlage verhinderbar, eindämmbar und/oder löschbar ist, wobei die Feuerschutzvorrichtung ein oder mehrere Feuerschutzelemente zur Beeinflussung einer Flammenausbreitung umfasst.

Unter einem Brand ist in dieser Beschreibung und den beigefügten Ansprüchen insbesondere ein Schadensfeuer zu verstehen.

Ein Feuerschutzelement kann beispielsweise eine Zwischenwand zwischen zwei oder mehr Filterelementen oder Filtermodulen der Filteranlage sein. Ein solches Feuerschutzelement ist insbesondere eine Feuerschutzwand.

Ein oder mehrere Feuerschutzelemente können beispielsweise ein Teil oder Bestandteil eines oder mehrerer Filterelemente oder eines oder mehrerer Filtermodule sein.

Ein Feuerschutzelement ist beispielsweise ein Abschnitt eines Filtermoduls, einer Filtermodulaufnahme, eines Filterelements und/oder einer Filterelementaufnahme.

Beispielsweise kann vorgesehen sein, dass ein Feuerschutzelement ein Abschnitt eines Gehäuses und/oder einer Wandung eines Filtermoduls, einer Filtermodulaufnahme, eines Filterelements und/oder einer Filterelementaufnahme ist.

Die Filteranlage, welche eine Feuerschutzvorrichtung umfasst, weist vorzugsweise einzelne oder mehrere Merkmale und/oder Vorteile der Filteranlagen auf, welche mindestens ein Filtermodul umfassen.

Günstig kann es sein, wenn die Feuerschutzvorrichtung ein oder mehrere Feuerschutzelemente umfasst, welche im Brandfall betätigbar sind.

Insbesondere kann vorgesehen sein, dass die Feuerschutzvorrichtung ein oder mehrere Feuerschutzelemente umfasst, welche im Brandfall bewegbar, insbesondere in einen Strömungsweg oder Feuerausbreitungsweg einbringbar oder aus demselben entfernbar, sind.

Es kann vorgesehen sein, dass ein oder mehrere Feuerschutzelemente ein brandhemmendes Material umfassen oder aus einem brandhemmenden Material gebildet sind.

Ein brandhemmendes Material kann beispielsweise ein metallisches Material und/oder ein keramisches Material umfassen oder ein metallisches Material und/oder ein keramisches Material sein.

Ein brandhemmendes Material ist insbesondere ein Material, welches nach der Norm DIN 4102 im Brandfall einen Funktionserhalt über mindestens ungefähr 30 Minuten (Feuerwiderstandsklasse F30, W30, T30), insbesondere mindestens ungefähr 60 Minuten (Feuerwiderstandsklasse F60, W60, T60), beispielsweise mindestens ungefähr 90 Minuten (Feuerwiderstandsklasse F90, W90, T90) ermöglicht.

Alternativ oder ergänzend hierzu kann vorgesehen sein, dass ein oder mehrere Feuerschutzelemente ein Material umfassen oder aus einem Material gebildet sind, welches durch Einwirkung von Wärme und/oder durch Kontakt mit einem Reaktionsstoff auflösbar, verflüssigbar und/oder verbrennbar ist.

Ein solches Material weist vorzugsweise einen geringen Schmelzpunkt, eine geringe Feuerfestigkeit, eine geringe chemische Beständigkeit und/oder eine geringe physikalische Beständigkeit auf, insbesondere in Bezug auf weitere Bestandteile und/oder Bauteile der Filteranlage.

Ein Material, welches durch Wärmeeinwirkung und/oder Kontakt mit einem Reaktionsstoff auflösbar, verflüssigbar und/oder verbrennbar ist, ist beispielsweise eine Folie, Schmelzlot, Karton oder ähnliches.

Günstig kann es sein, wenn ein oder mehrere Feuerschutzelemente ein Material umfassen oder aus einem Material gebildet sind, welches unter Hitzeeinwirkung entfernbar ist, so dass insbesondere ein Durchgang (Löschöffnung) freigebbar ist.

Alternativ oder ergänzend hierzu kann vorgesehen sein, dass ein oder mehrere Feuerschutzelemente so ausgebildet und/oder angeordnet sind, dass durch Krafteinwirkung, insbesondere durch Aufbringen einer Last und/oder eines Drucks, das eine oder die mehreren Feuerschutzelemente entfernbar und/oder zerstörbar sind.

Ein Material, welches durch Einwirkung von Wärme auflösbar, verflüssigbar und/oder verbrennbar ist, ist vorzugsweise ein Material, welches im Brandfall einen Funktionserhalt über weniger als eine Minute gewährleistet.

Es kann vorgesehen sein, dass das eine oder die mehreren Feuerschutzelemente in einer Ausgangsposition an einer oder mehreren Aufnahmen für ein oder mehrere Feuerschutzelemente angeordnet sind.

Das Material des einen oder der mehreren Feuerschutzelemente weist im Vergleich zu einem Material der einen oder der mehreren Aufnahmen vorzugsweise einen geringeren Schmelzpunkt, eine geringere Feuerfestigkeit (Feuerwiderstandsklasse) und/oder eine geringere chemische und/oder physikalische Beständigkeit auf.

Günstig kann es sein, wenn durch Einwirkung von Wärme und/oder durch Kontakt mit einem Reaktionsstoff und/oder durch Krafteinwirkung ein oder mehrere Feuerschutzelemente entfernbar sind, insbesondere ohne die eine oder die mehreren Aufnahmen zur Aufnahme des einen oder der mehreren Feuerschutzelemente zu entfernen, zu verformen oder sonstwie zu beeinträchtigen.

Die eine oder die mehreren Aufnahmen sind insbesondere Bestandteil der Filteranlage, beispielsweise Abschnitte eines Gehäuses und/oder einer Wandung eines Filtermoduls, einer Filtermodulaufnahme, eines Filterelements und/oder einer Filterelementaufnahme.

Die eine oder die mehreren Aufnahmen sind beispielsweise aus einem metallischen Material gebildet oder umfassen ein metallisches Material.

Die eine oder die mehreren Aufnahmen sind vorzugsweise Stabilisationsvorrichtungen zur mechanischen Stabilisation eines oder mehrerer Feuerschutzelemente in einem Normalbetrieb (Filterbetrieb) der Filteranlage.

Beispielsweise kann vorgesehen sein, dass eine Aufnahme ein Gitter umfasst oder durch ein Gitter gebildet ist, an welchem ein oder mehrere Feuerschutzelemente anlegbar sind oder anliegen.

Ein Normalbetrieb der Filteranlage ist insbesondere ein Filterbetrieb der Filteranlage, in welchem mittels der Filteranlage Verunreinigungen aus einem Verunreinigungen enthaltenden Rohgasstrom abgeschieden werden. Im Normalbetrieb der Filteranlage ist diese insbesondere beeinträchtigungsfrei betreibbar.

Hiervon zu unterscheiden ist vorzugsweise ein Betrieb oder Zustand der Filteranlage, in welchem ein Brand vorliegt. In einem solchen Brandfall wird die Filteranlage durch ein Feuer beschädigt oder zumindest der Betrieb der Filteranlage durch ein Feuer beeinträchtigt.

Die eine oder die mehreren Aufnahmen für das eine oder die mehreren Feuerschutzelemente sind vorzugsweise aus einem Material gebildet, welches eine Feuerwiderstandsklasse von mindestens F30, W30, T30, vorzugsweise mindestens F60, W60, T60, beispielsweise mindestens F90, W90, T90, bietet.

Bei einer Ausgestaltung der Erfindung kann vorgesehen sein, dass mittels eines oder mehrerer Feuerschutzelemente bei einem Brand eine oder mehrere Löschöffnungen der Filteranlage freigebbar sind.

Insbesondere kann vorgesehen sein, dass eine oder mehrere Löschöffnungen eines oder mehrerer Filterelemente, eines oder mehrerer Filterelementaufnahmen, eines oder mehrerer Filtermodule und/oder eines oder mehrerer Filtermodulaufnahmen freigebbar sind.

Die eine oder die mehreren Löschöffnungen der Filteranlage sind beispielsweise Ausnehmungen oder Aussparungen in einer oder mehreren Wandungen der Filteranlage. Die Ausnehmungen oder Aussparungen sind im Normalbetrieb der Filteranlage vorzugsweise mittels eines oder mehrerer Feuerschutzelemente verschlossen.

Günstig kann es sein, wenn eine oder mehrere Aufnahmen für das eine oder die mehreren Feuerschutzelemente eine oder mehrere Löschöffnungen umfassen oder bilden, welche im Normalbetrieb der Filteranlage mittels eines oder mehrerer Feuerschutzelemente verschlossen sind.

Die Filteranlage umfasst vorzugsweise ein oder mehrere Filterelemente und/oder ein oder mehrere Filtermodule, deren Innenraum bei einem Brand durch Entfernen eines oder mehrerer Feuerschutzelemente von außen zugänglich ist.

Insbesondere kann vorgesehen sein, dass das eine oder die mehreren Feuerschutzelemente durch Einwirkung von Wärme und/oder durch Kontakt mit einem Reaktionsstoff und/oder durch Krafteinwirkung entfernbar sind, so dass der Innenraum des einen oder der mehreren Filterelemente und/oder der Innenraum des einen oder der mehreren Filtermodule von außen zugänglich ist.

Günstig kann es sein, wenn die Feuerschutzvorrichtung eine Applikationsvorrichtung umfasst, mittels welcher ein Löschmaterial und/oder ein Reaktionsstoff abgebbar ist.

Insbesondere kann vorgesehen sein, dass mittels der Applikationsvorrichtung ein Löschmaterial auf brennende oder brandgefährdete Elemente und/oder Bereiche der Filteranlage abgebbar ist.

Alternativ oder ergänzend hierzu kann vorgesehen sein, dass mittels der Applikationsvorrichtung ein Löschmaterial und/oder ein Reaktionsstoff auf ein oder mehrere Feuerschutzelemente abgebbar ist.

Die Applikationsvorrichtung ist beispielsweise eine Sprinklervorrichtung.

Vorzugsweise ist mittels der Applikationsvorrichtung ein flüssiges, schaumartiges oder pulverförmiges Löschmaterial abgebbar.

Alternativ oder ergänzend hierzu kann vorgesehen sein, dass mittels der Applikationsvorrichtung ein flüssiger, schaumartiger oder pulverförmiger Reaktionsstoff abgebbar ist.

Es kann vorgesehen sein, dass die Applikationsvorrichtung so ausgebildet und/oder angeordnet ist, dass bei Ausströmen von Löschmaterial und/oder Reaktionsstoff das Löschmaterial und/oder der Reaktionsstoff in Richtung des einen oder der mehreren Feuerschutzelemente ausströmt und auf das eine oder die mehreren Feuerschutzelemente trifft.

Bei einer Ausgestaltung der Erfindung kann vorgesehen sein, dass bei einem Brand mittels der Applikationsvorrichtung Löschmaterial und/oder Reaktionsstoff durch eine oder mehrere Löschöffnungen der Filteranlage hindurch in einen Innenraum der Filteranlage abgebbar ist, insbesondere nachdem ein oder mehrere Feuerschutzelemente zur Freigabe einer oder mehrerer Löschöffnungen entfernt wurden.

Das Löschmaterial und/oder der Reaktionsstoff ist vorzugsweise in einen Innenraum eines oder mehrerer Filterelemente und/oder in einen Innenraum eines oder mehrerer Filtermodule abgebbar.

Günstig kann es sein, wenn die Applikationsvorrichtung außerhalb eines Innenraums der Filteranlage, insbesondere außerhalb eines Rohgasraums der Filteranlage und/oder außerhalb eines Reingasraums der Filteranlage, angeordnet ist. Die Applikationsvorrichtung kann hierdurch vorzugsweise frei von im Rohgasstrom enthaltenen Verunreinigung gehalten werden.

Die Applikationsvorrichtung kann beispielsweise direkt über, seitlich versetzt oberhalb oder seitlich neben einem oder mehreren Filterelementen und/oder einem oder mehreren Filtermodulen der Filteranlage angeordnet sein.

Vorteilhaft kann es sein, wenn die Filteranlage ein oder mehrere Filtermodule umfasst, welche als verfahrbare oder verschiebbare Transportwagen ausgebildet sind.

Eine Wandung des einen oder der mehreren Transportwagen umfasst vorzugsweise eine oder mehrere Löschöffnungen, welche in einem Normalbetrieb der Filteranlage mittels eines oder mehrerer Feuerschutzelemente verschlossen sind.

Die eine oder die mehreren Löschöffnungen sind beispielsweise an einer Oberseite oder Hinterseite (Rückseite, Rückwandung) des Transportwagens angeordnet.

Insbesondere kann vorgesehen sein, dass die Filteranlage mindestens eine Filtermodulaufnahme umfasst, welche an einer Außenwandung einer Grundkonstruktion der Filteranlage angeordnet ist und/oder in die Außenwandung der Grundkonstruktion integriert ist. Mindestens ein Filtermodul ist vorzugsweise durch Anlegen desselben an die Außenwandung an der mindestens einen Filtermodulaufnahme anordenbar oder angeordnet. Eine oder mehrere Löschöffnungen sind dann beispielsweise an oder in der Außenwandung der Grundkonstruktion angeordnet. Alternativ oder ergänzend hierzu kann vorgesehen sein, dass eine oder mehrere Löschöffnungen an oder in einer der Außenwandung abgewandten Rückseite (Rückwandung) des mindestens einen Filtermoduls angeordnet sind.

Bei einer Ausgestaltung der Erfindung kann vorgesehen sein, dass die Filteranlage ein oder mehrere Filtermodule umfasst, welche als verfahrbare oder verschiebbare Transportwagen ausgebildet sind. Eine Wandung des einen oder der mehreren Transportwagen umfasst vorzugsweise ein oder mehrere Löschöffnungen, welche in einem Normalbetrieb der Filteranlage mittels eines oder mehrerer Feuerschutzelemente verschlossen sind.

Insbesondere kann vorgesehen sein, dass ein oder mehrere Deckenwandungen und/oder Seitenwandungen, insbesondere eine oder mehrere Rückwandungen (Rückseiten), des einen oder der mehreren Transportwagen ein oder mehrere Löschöffnungen umfassen, welche in einem Normalbetrieb der Filteranlage mittels eines oder mehrerer Feuerschutzelemente verschlossen sind.

Die vorstehend beschriebene Filteranlage eignet sich insbesondere zur Verwendung in einer Lackieranlage.

Die vorliegende Erfindung betrifft daher auch eine Lackieranlage zum Lackieren von Werkstücken, insbesondere Fahrzeugkarosserien, welche insbesondere eine oder mehrere erfindungsgemäße Filteranlagen umfasst.

Die vorliegende Erfindung betrifft ferner ein Verfahren zum Betreiben einer Filteranlage zum Abscheiden von Verunreinigungen aus einem Verunreinigungen enthaltenen Rohgasstrom.

Insbesondere betrifft die Erfindung ein Verfahren zum Betreiben einer erfindungsgemäßen Filteranlage.

Vorzugsweise ist bei dem erfindungsgemäßen Verfahren Folgendes vorgesehen:
Aktivieren einer Feuerschutzvorrichtung zum Verhindern, Eindämmen und/oder Löschen eines Brands in der Filteranlage, wobei mittels eines oder mehrerer Feuerschutzelemente der Feuerschutzvorrichtung eine Flammenausbreitung beeinflusst wird.

Das erfindungsgemäße Verfahren weist ferner vorzugsweise einzelne oder mehrere Merkmale und/oder Vorteile auf, welche im Zusammenhang mit den erfindungsgemäßen Filteranlagen und/oder den erfindungsgemäßen Lackieranlagen und/oder dem Verfahren zum Abscheiden von Verunreinigungen beschrieben sind.

Günstig kann es sein, wenn mittels eines oder mehrerer Feuerschutzelemente bei einem Brand eine oder mehrere Löschöffnungen der Filteranlage freigegeben werden.

Bei dem Verfahren sind somit vorzugsweise ein oder mehrere Feuerschutzelemente zunächst so angeordnet, dass ein oder mehrere Löschöffnungen der Filteranlage abgedeckt oder verschlossen sind. Zum Freigeben der einen oder der mehreren Löschöffnungen werden das eine oder die mehreren Feuerschutzelemente vorzugsweise entfernt.

Ferner können die Filteranlagen, die Lackieranlagen und/oder die Verfahren einzelne oder mehrere der nachfolgenden beschriebenen Merkmale und/oder Vorteile aufweisen:
Mittels eines oder mehrerer Feuerschutzelemente, welche insbesondere aus einem brandhemmenden Werkstoff (Material) gebildet sind, kann vorzugsweise eine Brandausbreitungsgeschwindigkeit (Flammenausbreitungsgeschwindigkeit) reduziert und/oder ein Brandübergriff von brennenden Filterelementen und/oder Filtermodulen auf weitere Filterelemente und/oder Filtermodule verhindert oder zumindest verlangsamt werden.

Ein Material, welches durch Einwirkung von Wärme und/oder durch Kontakt mit einem Reaktionsstoff auflösbar, verflüssigbar und/oder verbrennbar ist, ist beispielsweise ein schmelzbares Material.

Vorteilhaft kann es sein, wenn ein oder mehrere Filtermodule einen aus Profilbauteilen, insbesondere Aluminiumprofilen, gebildeten Rahmen umfassen.

Flächenbauteile eines Filtermoduls sind vorzugsweise Metallplatten, beispielsweise Aluminiumplatten oder Aluminiumverbundplatten.

Insbesondere kann vorgesehen sein, dass ein Filtermodul einen Rahmen aus Aluminiumprofilen und aus Aluminiumplatten oder Aluminiumverbundplatten gebildete Wandungen umfasst. Auf diese Weise kann ein einfacher und rascher Aufbau eines Filtermoduls realisiert werden.

Ein Filtermodul ist insbesondere an eine Außenwandung der Filteranlage anlegbar, anpressbar und/oder anschließbar.

Eine Abdichtung zwischen einem Filtermodul und einer Filtermodulaufnahme kann beispielsweise mittels eines Dichtprofils, insbesondere eines Gummidichtprofils, erfolgen. Ein Dichtprofil oder eine sonstige Dichtung kann beispielsweise an dem Filtermodul und/oder der Filtermodulaufnahme angeordnet sein.

Vorzugsweise erfolgt eine Abdichtung zwischen einem Filtermodul und einer Filtermodulaufnahme durch Anpressen eines Dichtelements oder einer sonstigen Dichtung, beispielsweise eines Dichtprofils, an eine plane Fläche.

Alternativ hierzu kann vorgesehen sein, dass sowohl an dem Filtermodul als auch an der Filtermodulaufnahme jeweils ein oder mehrere Dichtelemente vorgesehen sind, beispielsweise Kantenschutzdichtprofile oder Gummiklemmprofile.

Günstig kann es sein, wenn die Filteranlage eine Arretiervorrichtung zum Arretieren eines oder mehrerer Filtermodule an einer oder mehreren Filtermodulaufnahmen umfasst.

Die Arretiervorrichtung kann beispielsweise ein oder mehrere Arretierelemente, insbesondere eine oder mehrere Treibriegelstangen, umfassen.

Das Arretierelement ist vorzugsweise mit einem Vorsprung und/oder einer Vertiefung, welcher bzw. welche beispielsweise in einem Boden angeordnet ist, in Eingriff bringbar.

Vorzugsweise umfasst die Arretiervorrichtung eine oder mehrere Schrägflächen, so dass bei einem In-Eingriff-Bringen des Arretierelements mit einem Vorsprung und/oder einer Vertiefung eine Klemmwirkung erzeugt werden kann. Beispielsweise kann vorgesehen sein, dass mittels einer oder mehrerer Schrägflächen ein Filtermodul mittels des Arretierelements der Arretiervorrichtung gegen eine Filtermodulaufnahme pressbar und/oder in dieser Position arretierbar ist.

Die Arretiervorrichtung kann beispielsweise ein Arretierelement, zwei Arretierelemente oder mehr als zwei Arretierelemente pro Filtermodul aufweisen.

Eine Arretiervorrichtung, welche insbesondere als eine Verriegelungsvorrichtung dient, kommt vorzugsweise dann zur Verwendung, wenn ein oder mehrere Filterelemente an einer Außenwandung der Filteranlage anlegbar oder anordenbar sind. Durch die Verwendung derartiger Filtermodule und/oder der zugehörigen Arretiervorrichtung kann insbesondere eine gute Zugänglichkeit der Filtermodule einerseits aber auch eine sichere Festlegung der Filtermodule an den Filtermodulaufnahmen andererseits realisiert werden.

Die Arretiervorrichtung kann ferner beispielsweise als ein Türfeststeller, beispielsweise ein in den Boden versenkbarer Türfeststeller, ausgebildet sein. Auch hierdurch kann ein Filtermodul einfach und zuverlässig an der Filtermodulaufnahme festgelegt werden.

Mittels der Arretiervorrichtung ist das Filtermodul vorzugsweise verriegelbar und/oder in einer vorgegebenen Position fixierbar sowie vorzugsweise auch zur Erzeugung eines Anpressdrucks an einer Dichtung an die Filtermodulaufnahme anpressbar.

Bei einer Ausgestaltung der Erfindung kann vorgesehen sein, dass die Filteranlage, insbesondere ein Filtermodul und/oder eine Filtermodulaufnahme, eine Betätigungsvorrichtung zur Betätigung eines oder mehrerer Ventilvorrichtungen umfasst.

Eine solche Betätigungsvorrichtung umfasst insbesondere einen Betätigungshebel, welcher mit einem oder mehreren Klappenelementen der Ventilvorrichtung gekoppelt ist.

Durch eine Betätigung des Betätigungshebels sind vorzugsweise das eine oder die mehreren Klappenelemente der Ventilvorrichtung von einer Offenstellung in eine Schließstellung bzw. von einer Schließstellung in eine Offenstellung bringbar.

Vorzugsweise umfasst die Betätigungsvorrichtung eine Rückstellvorrichtung, beispielsweise eine Feder, mittels welcher der Betätigungshebel und/oder das eine oder die mehreren Klappenelemente der Ventilvorrichtung bei ausbleibender Betätigung des Betätigungshebels automatisch in eine Schließstellung gebracht werden.

Vorzugsweise umfasst die Betätigungsvorrichtung ferner einen Anschlag und/oder eine Kulissenführung, welcher bzw. welche beispielsweise an einem Filtermodul angeordnet ist und der Betätigung des Betätigungshebels dient.

Der Betätigungshebel und die gesamte Ventilvorrichtung sind dann vorzugsweise an einer Filtermodulaufnahme angeordnet.

Es kann jedoch auch vorgesehen sein, dass die Ventilvorrichtung und der Betätigungshebel der Betätigungsvorrichtung an einem Filtermodul angeordnet sind. Der Anschlag und/oder die Kulissenführung zum Betätigen des Betätigungshebels ist dann vorzugsweise an der Filtermodulaufnahme angeordnet.

Die Ventilvorrichtung ist insbesondere eine Klappe zum Verschluss eines Reingaskanals gegenüber einer Umgebung der Filteranlage.

Eine Ventilvorrichtung ist vorzugsweise direkt stromabwärts des Filtermoduls angeordnet.

Die Ventilvorrichtung ist vorzugsweise durch das Heranfahren des Filtermoduls an die Filtermodulaufnahme mechanisch betätigbar, insbesondere derart, dass Klappenelemente der Ventilvorrichtung geöffnet werden.

Wird das Filtermodul von der Filtermodulaufnahme entfernt, werden die Klappenelemente der Ventilvorrichtung vorzugsweise automatisch geschlossen.

Der Öffnungsvorgang und/oder der Schließvorgang können vorzugsweise mittels des Anschlags und/oder einer Führungskulisse ausgelöst werden.

Zur Gewährleistung konstanter Lackierbedingungen in der Lackieranlage wird vorzugsweise ein Volumenstrom in den Lackierzonen konstant gehalten. Mit steigender Nutzungsdauer eines Filtermoduls erhöht sich üblicherweise ein Differenzdruck aufgrund der die Durchströmung der Filterelemente behindernden Verunreinigungen.

Während des Betriebs des Filtermoduls, insbesondere über eine gesamte Betriebsdauer hinweg, wird vorzugsweise ein Volumenstrom des durch ein Filtermodul strömenden Gasstroms kontinuierlich gemessen und/oder geregelt. Beispielsweise kann der Volumenstrom aus der Messung des Differenzdrucks und/oder mittels eines Staurohrs, eines Flügelrads und/oder eines Hitzdrahts ermittelt werden.

Durch einen wachsenden Differenzdruck reduziert sich im Laufe der Betriebsdauer der Volumenstrom.

Vorzugsweise wird zur Anpassung eines Volumenstroms eine Drehzahl und/oder die Leistung eines Ventilators und/oder Gebläses gesteuert und/oder geregelt.

Beispielsweise kann vorgesehen sein, dass mit zunehmender Befüllung der Filterelemente mit Verunreinigungen und dem damit einhergehenden steigenden Differenzdruck eine Ventilatordrehzahl kontinuierlich erhöht wird.

Durch Ermittlung der Drehzahl des Ventilatorlaufrads kann vorzugsweise ein Wechselzeitpunkt zum Wechseln eines oder mehrerer Filterelemente eines Filtermoduls bestimmt werden. Beispielsweise kann vorgesehen sein, dass bei Erreichen eines definierten Drehzahlgrenzwertes ein oder mehrere Filterelemente und/oder Filtermodule ausgetauscht werden. Insbesondere können einzelne Filtermodule und/oder Filterelemente eines Filtermoduls einer oder mehrerer Lackierzonen der Lackieranlage ausgetauscht werden.

Günstig kann es sein, wenn die Filteranlage ein oder mehrere Filtermodule und einen Sammelkanal umfasst.

Dem Sammelkanal ist vorzugsweise ein durch Reinigen des Rohgasstroms erhältlicher Reingasstrom aus dem einen oder den mehreren Filtermodulen zuführbar.

Günstig kann es sein, wenn der Sammelkanal oberhalb des einen oder der mehreren Filtermodule angeordnet ist.

Insbesondere ist der Sammelkanal direkt über dem einen oder den mehreren Filtermodulen angeordnet.

Der Sammelkanal und das eine oder die mehreren Filtermodule sind somit vorzugsweise in vertikaler Richtung aufeinander folgend angeordnet.

Die Filteranlage weist dabei vorzugsweise eine einseitige Filtermodulanordnung auf, in welcher sämtliche Filtermodule auf einer einzigen Seite eines zentralen Rohgasschachts angeordnet sind.

Das eine oder die mehreren Filtermodule sind vorzugsweise auf einem Boden bewegbar, auf welchem die gesamte Filteranlage angeordnet ist. Dieser Boden ist insbesondere ein Hallenboden, welcher vorzugsweise für sehr hohe Lasten ausgelegt ist.

Eine Einströmöffnung eines Filtermoduls kann beispielsweise unterhalb einer Ausströmöffnung sein, so dass ein mittels des Filtermoduls gereinigter Reingasstrom das Filtermodul nach oben verlassen kann.

Ein Sammelkanal ist vorzugsweise über den Ausströmöffnungen der Filtermodule angeordnet und dient insbesondere der Abführung von Reingas aus sämtlichen Filtermodulen.

Bei einer alternativen Ausführungsform kann vorgesehen sein, dass die Filtermodule einerseits und der Sammelkanal andererseits auf einander gegenüberliegenden Seiten des zentralen Rohgasschachts angeordnet sind.

Die Filteranlage umfasst dann vorzugsweise ein oder mehrere Reingaskanäle, mittels welchen Reingas aus den Filtermodulen abführbar und dem Sammelkanal zuführbar ist.

Der eine oder die mehreren Reingaskanäle kreuzen dabei vorzugsweise den Rohgasschacht und werden insbesondere im Betrieb der Filteranlage von Rohgas umströmt.

Die Reingaskanäle sind dabei insbesondere oberhalb von Einströmöffnungen der Filtermodule angeordnet.

Der Reingaskanal ist vorzugsweise bezüglich der vertikalen Richtung zumindest näherungsweise auf derselben Höhe wie die Filtermodule angeordnet.

Den Rohgasschacht kreuzende Reingaskanäle können auch als Stichleitungen bezeichnet werden.

Sämtliche Angaben bezüglich einer Seite und/oder der zentralen Anordnung des Rohgasschachts beziehen sich auf einen senkrecht zu einer Förderrichtung einer Fördervorrichtung genommenen Querschnitt der Filteranlage und/oder der Lackieranlage.

Vorteilhaft kann es sein, wenn die Filteranlage ein oder mehrere Filtermodule umfasst, welche eine Vorabscheidevorrichtung umfassen.

Die Vorabscheidevorrichtung umfasst vorzugsweise ein oder mehrere Abscheideelemente, welche beispielsweise einen I-förmigen und/oder Doppel-T-förmigen Querschnitt aufweisen.

Vorzugsweise sind ein oder mehrere Abscheideelemente der Vorabscheidevorrichtung versetzt zueinander und/oder ineinander geschachtelt angeordnet.

Die Vorabscheidevorrichtung dient vorzugsweise der einfachen oder mehrfachen Strömungsumlenkung eines in ein Filtermodul einströmenden Rohgasstroms. Auf diese Weise können insbesondere große und somit träge Verunreinigungen gegen die Abscheideelemente der Vorabscheidevorrichtung prallen und somit aus dem Rohgasstrom abgeschieden werden.

Die Vorabscheidevorrichtung kann beispielsweise vor eine Hauptfiltervorrichtung eines Filtermoduls eingehängt, angeklipst, eingerastet, angeschlossen und/oder sonstwie befestigt werden.

Die Vorabscheidevorrichtung kann beispielsweise an oder in einem Auffangelement, beispielsweise einer Auffangwanne, angeordnet sein.

Die Vorabscheidevorrichtung weist vorzugsweise einen Strömungsquerschnitt auf, welcher mindestens einem Einströmquerschnitt eines Filtermoduls entspricht.

Die Vorabscheidevorrichtung kann dabei beispielsweise ein oder mehrere Segmente umfassen.

Vorzugsweise erstreckt sich die Vorabscheidevorrichtung über einzelne, mehrere oder sämtliche Filterelemente der Hauptfiltervorrichtung des Filtermoduls.

Für einen Wechsel einer nachfolgenden Filterstufe, insbesondere von Filterelementen der Hauptfiltervorrichtung, wird die Vorabscheidevorrichtung vorzugsweise demontiert.

Die Vorabscheidevorrichtung kann beispielsweise Kartonmaterial, Kunststoffmaterial, Keramikmaterial und/oder Metall umfassen oder aus Kartonmaterial, Kunststoffmaterial, Keramikmaterial und/oder Metall gebildet sein.

Die Vorabscheidevorrichtung ist vorzugsweise bedarfsweise an einem Filtermodul anordenbar, insbesondere an Filtermodulen, welche unterhalb von Lackierzonen mit hohem Lack-Overspray-Anfall angeordnet sind. Die Betriebsdauer eines Filtermoduls bis zum Austausch eines oder mehrerer Filterelemente kann durch die Verwendung einer Vorabscheidevorrichtung vorzugsweise verlängert werden.

Die Vorabscheidevorrichtung ist vorzugsweise an einem Filtermodul nachrüstbar.

Bei einer Ausgestaltung der Erfindung kann vorgesehen sein, dass ein oder mehrere Filtermodule ein oder mehrere Filterelemente umfassen, welche verschiebbar in dem Filtermodul aufgenommen sind.

Vorteilhaft kann es sein, wenn zum Entfernen eines oder mehrerer Filterelemente aus dem Filtermodul das Filtermodul als Ganzes kippbar ist, so dass ein oder mehrere Filterelemente aus dem Filtermodul herausrutschen. Insbesondere können diese Filterelemente auf diese Weise direkt einem Entsorgungscontainer zugeführt werden.

Günstig kann es sein, wenn eine Bestückung eines Filtermoduls mit vorkonfektionierten Filtereinheiten, welche insbesondere aus mehreren Filterelementen bestehen, vorgesehen ist. Hierdurch kann die Bestückung eines Filtermoduls vorzugsweise beschleunigt und/oder automatisiert werden.

Bei einer Weiterbildung der Erfindung kann vorgesehen sein, dass ein Filtermodul ein fahrerloses Transportfahrzeug ist oder ein fahrerloses Transportfahrzeug umfasst.

Ein solches Filtermodul kann vorzugsweise selbstständig in eine Filterposition an einer Filtermodulaufnahme und/oder zu einem Wechselplatz zum Wechseln eines oder mehrerer Filterelemente fahren.

Alternativ oder ergänzend hierzu kann vorgesehen sein, dass die Filteranlage ein separates Fahrzeug mit Fahrantrieb, insbesondere ein fahrerloses Transportfahrzeug, umfasst, mittels welchem ein, vorzugsweise antriebsloses, Filtermodul von einer Filtermodulaufnahme zu einem Wechselplatz und/oder von dem Wechselplatz zur Filtermodulaufnahme transportierbar ist.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Schnitt durch eine erste Ausführungsform einer Lackieranlage zum Lackieren von Fahrzeugkarosserien, welche eine Filteranlage zum Reinigen eines mit Lack-Overspray beladenen Rohgasstroms umfasst;
- Fig. 2: eine schematische perspektivische Darstellung einer Filtermodulaufnahme der Filteranlage, mittels welcher ein Filtermodul zum Reinigen des Rohgasstroms aufnehmbar ist;
- Fig. 3: eine schematische Seitenansicht der Filtermodulaufnahme aus Fig. 2 und eines Filtermoduls während des Einbringens oder Entfernens des Filtermoduls in bzw. aus der Filtermodulaufnahme;
- Fig. 4: eine schematische perspektivische Darstellung einer alternativen Ausführungsform eines Filtermoduls;
- Fig. 5: eine der Fig. 3 entsprechende schematische Seitenansicht des Filtermoduls aus Fig. 4 und einer alternativen Ausführungsform der Filtermodulaufnahme beim Einbringen des Filtermoduls in die Filtermodulaufnahme;
- Fig. 6: eine der Fig. 5 entsprechende schematische Seitenansicht der Filtermodulaufnahme und des Filtermoduls, wobei das Filtermodul in einer Filterstellung angeordnet ist;
- Fig. 7: eine schematische perspektivische Darstellung einer Vorfiltervorrichtung eines Filtermoduls, wobei die Vorfiltervorrichtung eine einfache Strömungsumlenkung aufweist;
- Fig. 8: eine der Fig. 7 entsprechende Darstellung einer alternativen Ausführungsform einer Vorfiltervorrichtung eines Filtermoduls, wobei die Vorfiltervorrichtung eine zweifache Strömungsumlenkung aufweist;
- Fig. 9: eine der Fig. 1 entsprechende schematische Schnittdarstellung einer zweiten Ausführungsform einer Lackieranlage, bei welcher schräg zu einer Strömungsrichtung des Rohgasstroms angeordnete Strömungsleitflächen vorgesehen sind;
- Fig. 10: eine der Fig. 1 entsprechende schematische Schnittdarstellung einer dritten Ausführungsform einer Lackieranlage, welche eine alternative Anordnung und Durchströmung von Filtervorrichtungen der Filteranlage aufweist;
- Fig. 11: eine der Fig. 1 entsprechende schematische Schnittdarstellung einer vierten Ausführungsform einer Lackieranlage, welche eine weitere alternative Anordnung und Durchströmung von Filtervorrichtungen der Filteranlage aufweist;
- Fig. 12: eine der Fig. 1 entsprechende schematische Schnittdarstellung der vierten Ausführungsform der Lackieranlage aus Fig. 11, wobei ein Rohgasschacht der Filteranlage der Lackieranlage geschlossen ist;
- Fig. 13: eine der Fig. 1 entsprechende schematische Schnittdarstellung einer fünften Ausführungsform einer Lackieranlage, bei welcher an Seitenwandungen der Filteranlage anlegbare Filtermodule vorgesehen sind;
- Fig. 14: eine vergrößerte Darstellung des Bereichs XIV in Fig. 13;
- Fig. 15: eine der Fig. 1 entsprechende schematische Schnittdarstellung einer sechsten Ausführungsform einer Lackieranlage, bei welcher an Seitenwandungen der Filteranlage anlegbare Filtermodule sowie eine Feuerschutzvorrichtung vorgesehen sind;
- Fig. 16: eine schematische perspektivische Darstellung eines Filtermoduls der Lackieranlage aus Fig. 15;
- Fig. 17: eine schematische perspektivische teiltransparente Darstellung des Filtermoduls aus Fig. 16;
- Fig. 18: eine der Fig. 1 entsprechende schematische Schnittdarstellung einer siebten Ausführungsform einer Lackieranlage, bei welcher mittig angeordnete Filtermodule sowie eine direkt über den Filtermodulen angeordnete Feuerschutzvorrichtung vorgesehen sind;
- Fig. 19: eine der Fig. 1 entsprechende schematische Schnittdarstellung einer achten Ausführungsform einer Lackieranlage, bei welcher mittig angeordnete Filtermodule und eine seitlich versetzt zu den Filtermodulen angeordnete Feuerschutzvorrichtung vorgesehen sind;
- Fig. 20: eine der Fig. 1 entsprechende schematische Schnittdarstellung einer neunten Ausführungsform einer Lackieranlage, bei welcher ein zentraler Rohgasschacht und einseitig angeordnete Filtermodule sowie ein über den Filtermodulen angeordneter Reingas-Sammelkanal vorgesehen sind;
- Fig. 21: eine der Fig. 1 entsprechende schematische Schnittdarstellung einer zehnten Ausführungsform einer Lackieranlage, bei welcher ein zentraler Rohgasschacht und ein oder mehrere den Rohgasschacht querende Reingaskanäle vorgesehen sind;
- Fig. 22: eine schematische Seitenansicht einer alternativen Ausführungsform eines Filtermoduls, bei welcher eine Arretiervorrichtung vorgesehen ist, die eine mit einem Vorsprung auf einem Boden in Eingriff bringbare Treibriegelstange umfasst;
- Fig. 23: eine der Fig. 22 entsprechende schematische Seitenansicht einer weiteren alternativen Ausführungsform eines Filtermoduls, bei welcher eine Arretiervorrichtung vorgesehen ist, die eine mit einer Vertiefung in einem Boden in Eingriff bringbare Treibriegelstange umfasst;
- Fig. 24: einen schematischen horizontalen Schnitt durch eine weitere alternative Ausführungsform eines Filtermoduls, bei welcher eine Vorabscheidevorrichtung vorgesehen ist;
- Fig. 25: eine schematische perspektivische Darstellung einer weiteren alternativen Ausführungsform eines Filtermoduls, bei welcher eine Betätigungsvorrichtung zur Betätigung einer Ventilvorrichtung vorgesehen ist, wobei die Ventilvorrichtung in einer Schließstellung ist;
- Fig. 26: eine vergrößerte Darstellung des Bereichs XXVI in Fig. 25;
- Fig. 27: eine der Fig. 25 entsprechende schematische perspektivische Darstellung der alternativen Ausführungsform des Filtermoduls aus Fig. 25, wobei die Ventilvorrichtung in einer Offenstellung ist; und
- Fig. 28: eine vergrößerte Darstellung des Bereichs XXVIII in Fig. 27.

Gleiche oder funktional äquivalente Elemente sind in sämtlichen Figuren mit denselben Bezugszeichen versehen.

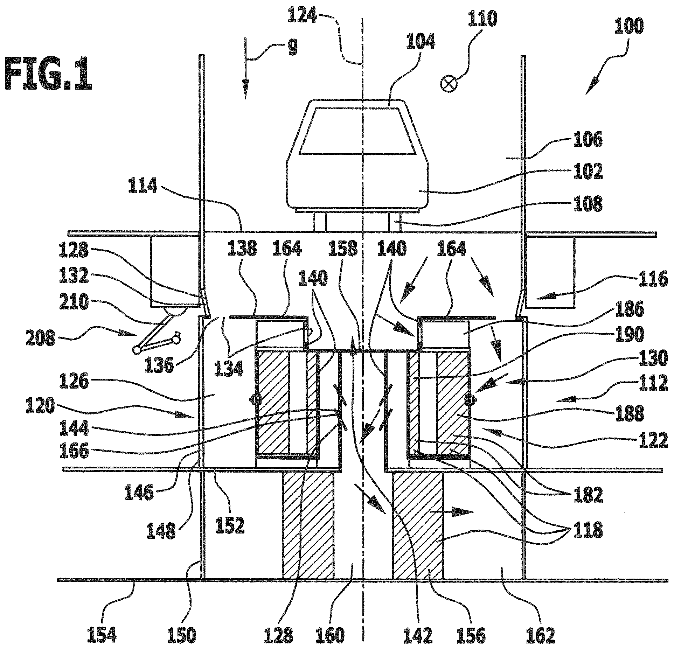

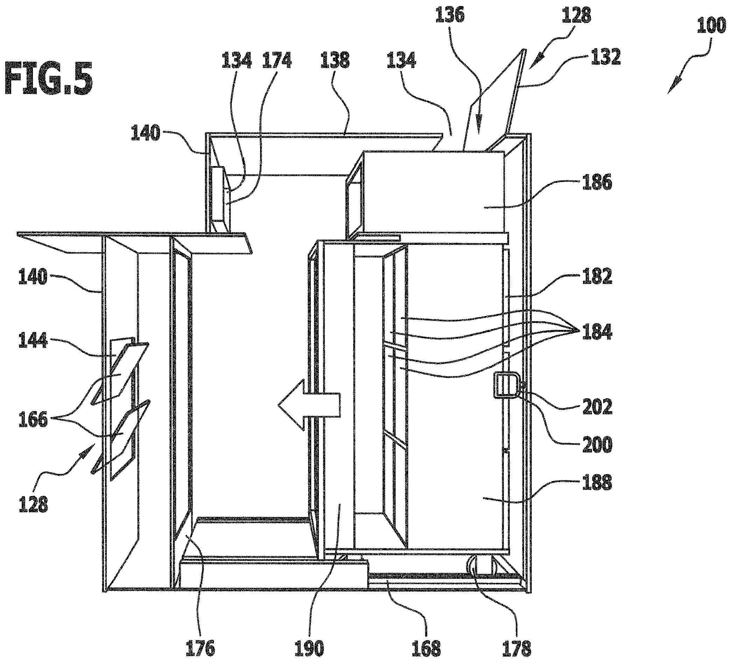

Eine in den Fig. 1 bis 8 dargestellte erste Ausführungsform einer als Ganzes mit 100 bezeichneten Lackieranlage dient dem Lackieren von Werkstücken 102, beispielsweise Fahrzeugkarosserien 104.

Die Lackieranlage 100 ist insbesondere eine Spritzlackieranlage oder Sprühlackieranlage, bei welcher ein flüssiger oder pulverförmiger Lack in Richtung des Werkstücks 102 beschleunigt wird, um das Werkstück 102 zu beschichten.

Um im Betrieb der Lackieranlage 100 eine unerwünschte Verunreinigung von nicht zu lackierenden Oberflächen zu vermeiden, wird eine Lackierkabine 106, in welcher der eigentliche Lackiervorgang stattfindet, in der Schwerkraftrichtung g von oben nach unten mit einem Luftstrom durchströmt.

Dieser Luftstrom nimmt während des Durchströmens der Lackierkabine 106 nicht an dem Werkstück 102 anhaftende Lackteilchen und/oder Lacktröpfchen auf und wird somit verunreinigt.

Der hierdurch erhältliche Gasstrom wird als Rohgasstrom bezeichnet, welcher als Verunreinigungen Lack-Overspray-Teilchen oder Lack-Overspray-Tröpfchen aufweist.

Die Lackieranlage 100 umfasst eine Fördervorrichtung 108, mittels welcher die Werkstücke 102, insbesondere die Fahrzeugkarosserien 104, in einer Förderrichtung 110 durch die Lackierkabine 106 hindurchförderbar sind.

Zur Reinigung des mit Verunreinigungen beladenen Rohgasstroms umfasst die Lackieranlage 100 eine Filteranlage 112, welche direkt unter der Lackierkabine 106 angeordnet ist und welcher der Rohgasstrom durch einen Kabinenboden 114 der Lackierkabine 106 zuführbar ist.

Die Filteranlage 112 umfasst eine Grundkonstruktion 116, insbesondere ein Gerüst oder eine Einhausung, in welchem bzw. in welcher mehrere Filtervorrichtungen 118 angeordnet sind.

Insbesondere weist die Grundkonstruktion 116 der Filteranlage 112 mehrere Filtermodulaufnahmen 120 zur Aufnahme mehrerer Filtermodule 122 auf.

Die Filtermodulaufnahmen 120 sind ortsfest an der Lackieranlage 100, insbesondere an der Filteranlage 112, angeordnet.

Die Filtermodule 122 hingegen sind vorzugsweise beweglich ausgebildet und wahlweise in die Filtermodulaufnahmen 120 einbringbar oder aus denselben entnehmbar.

Wie Fig. 1 zu entnehmen ist, sind bei der ersten Ausführungsform der Filteranlage 112 zwei Filtermodulaufnahmen 120 und zwei Filtermodule 122 bezüglich einer vertikalen Längsmittelebene 124 der Lackierkabine 100, insbesondere der Filteranlage 112, einander gegenüberliegend angeordnet und insbesondere im Wesentlichen spiegelsymmetrisch zueinander ausgebildet.

Die Filteranlage 112 umfasst zusätzlich zu den zwei dargestellten Filtermodulaufnahmen 120 und Filtermodulen 122 vorzugsweise weitere Filtermodulaufnahmen 120 und Filtermodule 122, welche vorzugsweise zwei sich längs der Förderrichtung 110 erstreckende Reihen von hintereinander angeordneten Filtermodulaufnahmen 120 und Filtermodulen 122 bilden.

Jede Filtermodulaufnahme 120 umfasst vorzugsweise einen Innenraum 126, welcher mittels der jeweiligen Filtermodulaufnahme 120 zugeordneten Ventilvorrichtungen 128 zugänglich machbar oder verschließbar ist.

Insbesondere ist mittels jeder Filtermodulaufnahme 120 ein separater Strömungskanal 130 der Filteranlage 112 gebildet. Vorzugsweise kann durch jeden Strömungskanal 130 im Wesentlichen unabhängig von den weiteren Strömungskanälen 130 ein Teil des Rohgasstroms hindurchgeführt werden.

Insbesondere kann somit bei vorhandenem Filtermodul 122 in einer Filtermodulaufnahme 120 gezielt in jedem Strömungskanal 130 ein Teil des Rohgasstroms von Verunreinigungen befreit werden, so dass dieser als Reingasstrom aus der jeweiligen Filtermodulaufnahme 120 abführbar ist.

Jede Filtermodulaufnahme 120 umfasst eine beispielsweise als Klappe 132 ausgebildete Ventilvorrichtung 128, welche beispielsweise an einer Einlassöffnung 134 der Filtermodulaufnahme 120 angeordnet ist.

Die mit der Klappe 132 versehene Einlassöffnung 134 ist insbesondere eine Bypassöffnung 136 der Filtermodulaufnahme 120.

Ferner umfasst jede Filtermodulaufnahme 120 vorzugsweise eine weitere Einlassöffnung 134, an welcher im Filterbetrieb der Filteranlage 112 eine (noch zu beschreibende) Vorfiltervorrichtung des zugehörigen Filtermoduls 122 anliegt.

Durch Öffnen oder Schließen der Klappe 132 der Bypassöffnung 136 kann somit gezielt eingestellt werden, ob der Rohgasstrom durch die Bypassöffnung 136 und/oder durch die Vorfiltervorrichtung in den Innenraum 126 der Filtermodulaufnahme 120 einströmt.

Die der Bypassöffnung 136 zuzuordnende Einlassöffnung 134 ist in einer Deckenwandung 138 der Filtermodulaufnahme 120 angeordnet.

Die weitere Einlassöffnung 134 ist in einer Seitenwandung 140 der Filtermodulaufnahme 120 angeordnet, welche der vertikalen Längsmittelebene 124 der Filteranlage 112 zugewandt angeordnet ist.

Aufgrund der einander gegenüberliegend angeordneten Paare von Filtermodulaufnahmen 120 ist mittels der Seitenwandungen 140 der Filtermodulaufnahmen 120 ein Rohgasschacht 142 gebildet, durch welchen das aus der Lackierkabine 106 abgeführte und mit Lack-Overspray verunreinigte Rohgas den Filtervorrichtungen 118 zuführbar ist.

Die Filtermodulaufnahmen 120 umfassen ferner jeweils noch mindestens eine Auslassöffnung 144, durch welche der durch die Filtermodulaufnahme 120 hindurchgeführte Gasstrom abführbar ist.

Zudem ist jeder Filtermodulaufnahme 120 eine Zugangsöffnung 146, insbesondere eine verschließbare Türe 148, zugeordnet.

Durch die Zugangsöffnung 146, welche insbesondere in einer Außenwandung 150 der Filteranlage 112 angeordnet ist, kann ein Filtermodul 122 aus der Filtermodulaufnahme 120 entnommen oder ein Filtermodul 122 der Filtermodulaufnahme 120 zugeführt werden.

Wie Fig. 1 zu entnehmen ist, sind die Filtermodulaufnahmen 120 und entsprechend auch die Filtermodule 122 bei der dargestellten ersten Ausführungsform auf einer Ebene 152 angeordnet, welche oberhalb eines Bodens 154 angeordnet ist, auf dem wiederum die gesamte Lackieranlage 100 aufgebaut ist.

Unterhalb, insbesondere direkt unter, den Filtermodulaufnahmen 120 sind Zusatzfiltervorrichtungen 156 angeordnet, welche vorzugsweise von den Filtervorrichtungen 118 der Filtermodule 122 verschiedene Filtervorrichtungen 118 sind.

Wie ferner Fig. 1 zu entnehmen ist, umfassen die Seitenwandungen 140 der Filtermodulaufnahmen 120 die Auslassöffnungen 144.

Die Auslassöffnungen 144 sind bezüglich der Schwerkraftrichtung g unter den Einlassöffnungen 134 angeordnet und mittels einer Trennwand 158, welche die bezüglich der vertikalen Längsmittelebene 124 einander gegenüberliegend angeordneten Filtermodulaufnahmen 120 längs einer im Wesentlichen horizontalen Ebene miteinander verbindet, voneinander getrennt.

Der Bereich über der Trennwand 158 ist dabei der Rohgasschacht 142.

Der Bereich unter der Trennwand 158 ist derjenige Bereich, in welchen der mittels der Filtervorrichtung 118 gereinigte Gasstrom strömt und welcher daher als Reingaskanal 160 bezeichnet wird.

Durch den Reingaskanal 160 ist das aus den Filtermodulaufnahmen 120 ausströmende Reingas, welches durch Reinigung des verunreinigten Rohgases erhältlich ist, den Zusatzfiltervorrichtungen 156 zuführbar.

Die Zusatzfiltervorrichtungen 156 werden dann in im Wesentlichen horizontaler Richtung durchströmt, um die Reinheit des Reingases weiter zu erhöhen.

Schließlich wird dieses Reingas zwei Sammelkanälen 162 zugeführt, welche auf den der vertikalen Längsmittelebene 124 abgewandten Seiten der Zusatzfiltervorrichtungen 156 angeordnet sind.

Die Deckenwandung 138 einer jeden Filtermodulaufnahme 120 ist bei der in den Fig. 1 bis 8 dargestellten ersten Ausführungsform der Lackieranlage 100, insbesondere der Filteranlage 112, im Wesentlichen horizontal ausgerichtet.

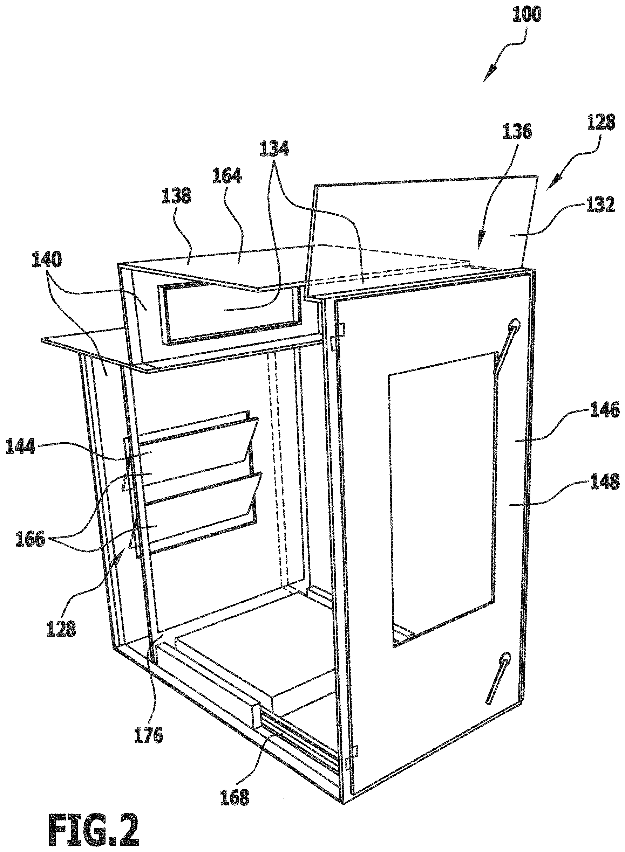

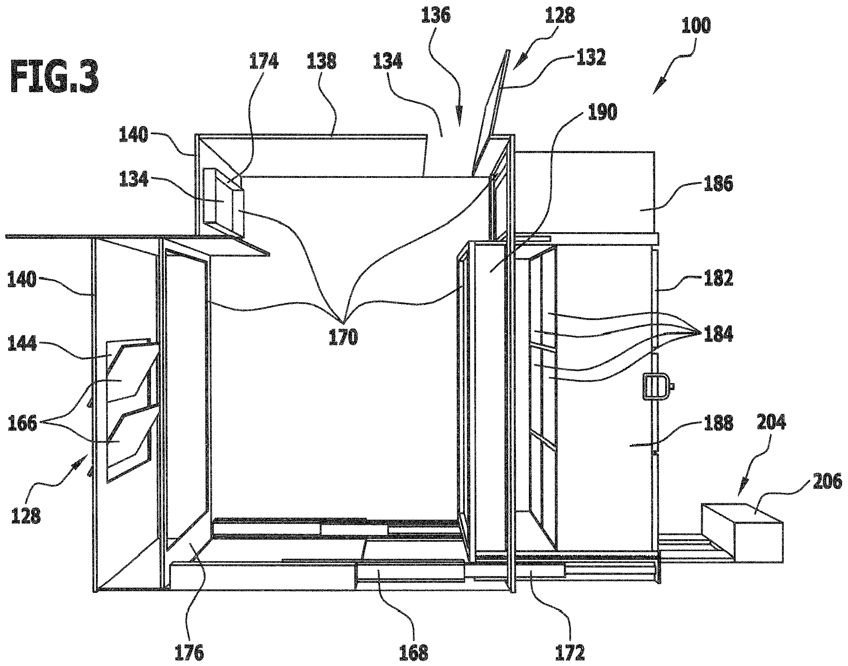

Die Deckenwandung 138 bildet dabei ein Strömungsleitblech 164, mittels welchem der Rohgasstrom gezielt den Einlassöffnungen 134 zuführbar ist. Weitere Details betreffend die Filtermodulaufnahme 120 und das Filtermodul 122 werden nachfolgend insbesondere mit Hinblick auf die Fig. 2 und 3 beschrieben.

Wie diesen Fig. 2 und 3 zu entnehmen ist, ist die Ventilvorrichtung 128 im Bereich der Auslassöffnung 144 als eine Jalousieklappe 166 ausgebildet.

Zudem ist bei der Filtermodulaufnahme 120 eine Führungsvorrichtung 168 vorgesehen.

Schließlich umfasst die Filtermodulaufnahme 120 noch mehrere Abdichtbereiche 170 zum Anlegen von hierzu korrespondierenden Abdichtbereichen 170 eines Filtermoduls 122.

Die Führungsvorrichtung 168 dient insbesondere der Bewegung, Führung und/ oder Arretierung eines Filtermoduls 122 relativ zu der Filtermodulaufnahme 120.

Die Führungsvorrichtung 168 umfasst insbesondere eine Teleskopschienenführung 172, mittels welcher ein Filtermodul 122 aus der in Fig. 1 dargestellten Filterstellung in eine Wechselstellung bringbar ist.

In der Filterstellung des Filtermoduls 122 liegen die Abdichtbereiche 170 der Filtermodulaufnahme 120 und die Abdichtbereiche 170 des Filtermoduls 122 aneinander an, so dass ein die Filtermodulaufnahme 120 und das Filtermodul 122 durchströmender Gasstrom zuverlässig einem vorgegebenen Strömungsweg folgt.

Ein erster Abdichtbereich 170 der Filtermodulaufnahme 120 ist als ein Einlassbereich 174 der in der Seitenwandung 140 angeordneten Einlassöffnung 134 ausgebildet. Der Einlassbereich 174 ist dabei insbesondere ein in den Innenraum 126 der Filtermodulaufnahme 120 hineinragender Vorsprung.

Der weitere Abdichtbereich 170 der Filtermodulaufnahme 120 ist durch ein Rahmenelement 176 gebildet, welches ein von einer Wandung der Filtermodulaufnahme 120 verschiedenes Element ist und im Wesentlichen parallel zur Seitenwandung 140 im Bereich der Auslassöffnung 144 verläuft.

Bei der in den Fig. 2 und 3 dargestellten Ausführungsform einer Filtermodulaufnahme 120 und eines Filtermoduls 122 ist die Führungsvorrichtung 168 wie vorstehend beschrieben als eine Teleskopschienenführung 172 ausgebildet.

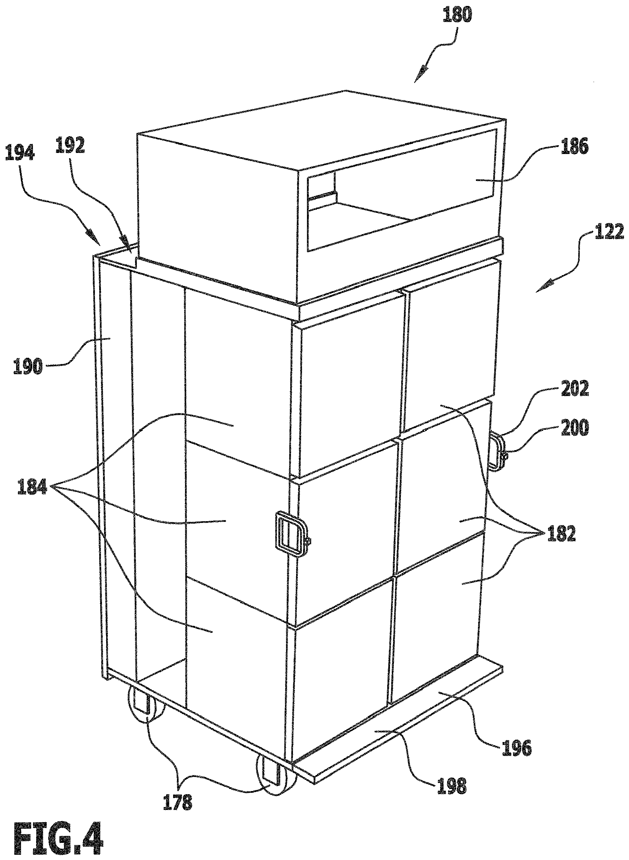

Anstelle einer solchen Teleskopschienenführung 172 kann jedoch auch eine Rollenvorrichtung 178 vorgesehen sein (siehe Fig. 4 bis 6).

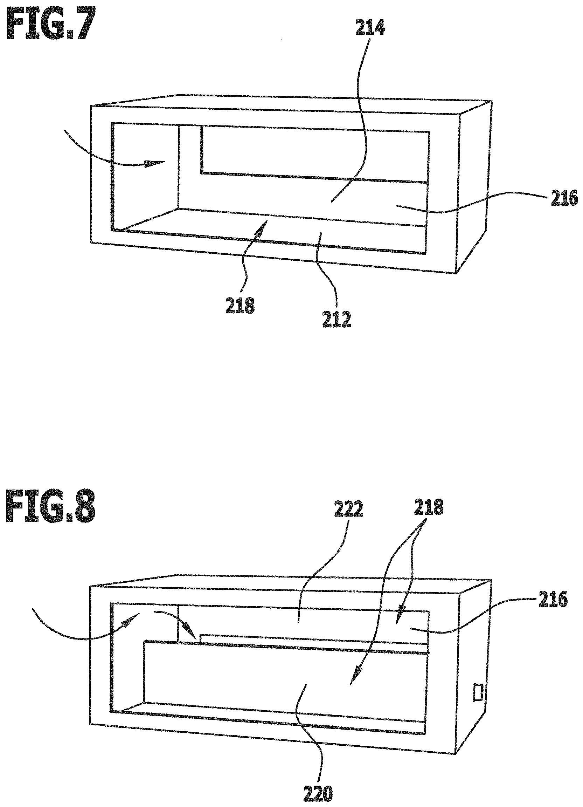

Da die Ausführungsform der Filtermodulaufnahme 120 und des Filtermoduls 122 gemäß den Fig. 2 und 3 im Übrigen mit der Ausführungsform gemäß den Fig. 4 bis 6 übereinstimmt, wird nachfolgend zur detaillierten Beschreibung des Filtermoduls 122 auf sämtliche Fig. 1 bis 6 sowie auf die weiteren Fig. 7 und 8 Bezug genommen.

Wie insbesondere Fig. 4 zu entnehmen ist, ist das Filtermodul 122 vorzugsweise als ein Transportwagen 180 ausgebildet. Mittels dieses Transportwagens 180 können insbesondere mehrere Filterelemente 182 gemeinsam transportiert werden.

Das Filtermodul 122 umfasst hierzu mehrere Filterelementaufnahmen 184 zur Aufnahme mehrerer Filterelemente 182.

Die Filterelemente 182 und die Filterelementaufnahmen 184 sind vorzugsweise derart unabhängig voneinander angeordnet und/oder ausgebildet, dass einzelne Filterelemente 182 unabhängig von den weiteren Filterelementen 182 aus den Filterelementaufnahmen 184 entfernt und, beispielsweise zum Austausch von verunreinigten Filterelementen 182 durch frische Filterelemente 182, ersetzt werden können.

Das Filtermodul 122 umfasst vorzugsweise drei Filtervorrichtungen 118, welche bezüglich einer Strömungsrichtung im Filterbetrieb der Filteranlage 112 nacheinander oder hintereinander von dem Gasstrom durchströmt werden.

Entsprechend der Reihenfolge der Durchströmung sind eine Vorfiltervorrichtung 186, eine Hauptfiltervorrichtung 188 und eine Nachfiltervorrichtung 190 vorgesehen.

Die Vorfiltervorrichtung 186 ist beispielsweise ein Trägheitsfilter mit einer einfachen oder mehrfachen Strömungsumlenkung.

Die Vorfiltervorrichtung 186 umfasst hierzu vorzugsweise lediglich ein einziges Filterelement 182.

Eine Filterelementaufnahme 184 zur Aufnahme des Filterelements 182 der Vorfiltervorrichtung 186 kann beispielsweise ein Rahmen 192 oder Gestell 194 des Filtermoduls 122 sein.

Die Vorfiltervorrichtung 186 ist insbesondere direkt über der Hauptfiltervorrichtung 188 angeordnet.

Die Hauptfiltervorrichtung 188 umfasst mehrere, beispielsweise sechs, Filterelementaufnahmen 184 zur Aufnahme von mehreren, insbesondere sechs, Filterelementen 182.

Die Filterelemente 182 der Hauptfiltervorrichtung 188 sind vorzugsweise Trägheitsabscheider, beispielsweise Einweg-Filter.

Die Nachfiltervorrichtung 190 ist seitlich benachbart zu der Hauptfiltervorrichtung 188 angeordnet.

Die Nachfiltervorrichtung 190 umfasst insbesondere ein einziges Filterelement 182, welches beispielsweise als Mattenfilter ausgebildet ist.

Die Filterelemente 182 der Vorfiltervorrichtung 186, der Hauptfiltervorrichtung 188 und der Nachfiltervorrichtung 190 sind in im Wesentlichen horizontaler Richtung durchströmbar.

Eine Durchströmungsrichtung der Vorfiltervorrichtung 186 ist dabei der Durchströmungsrichtung der Hauptfiltervorrichtung 188 und der Nachfiltervorrichtung 190 entgegengesetzt.

Das Filtermodul 122 umfasst ferner mindestens ein Auffangelement 196, mittels welchem im Filterbetrieb des Filtermoduls 122 und/oder beim Austauschen von Filterelementen 182 herabfallende Verunreinigungen auffangbar sind.

Das Auffangelement 196 ist insbesondere als Wanne 198 ausgebildet.

Schließlich umfasst das Filtermodul 122 noch ein oder mehrere Handhabungselemente 200, beispielsweise Griffe 202, mittels welchen eine Person einfach an dem Filtermodul 122 angreifen kann, um dasselbe zu bewegen.

Wie insbesondere Fig. 3 zu entnehmen ist, ist das Filtermodul 122 abgesehen von der Möglichkeit der Bewegung mittels der Führungsvorrichtung 168 auch mittels einer separaten Transportvorrichtung 204 bewegbar.

Die Transportvorrichtung 204 kann beispielsweise eine Hubwagenvorrichtung 206 sein, mittels welcher das Filtermodul 122 anhebbar und abtransportierbar ist.

Alternativ hierzu kann bei einer (nicht dargestellten) Ausführungsform der Lackieranlage 100, insbesondere der Filteranlage 112, vorgesehen sein, dass ein oder mehrere Filtermodule 122 mittels eines Hängeförderers oder eines fahrerlosen Transportsystems bewegbar, insbesondere transportierbar, sind.

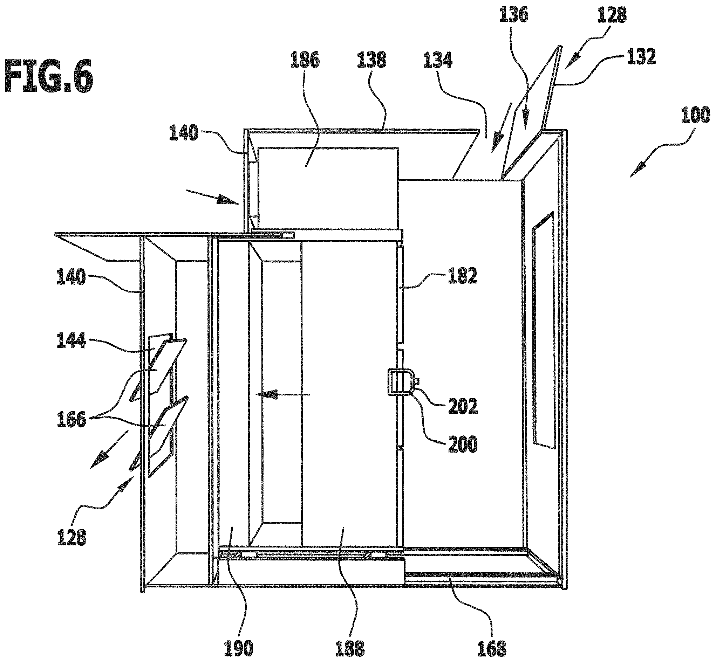

Mittels der Führungsvorrichtung 168 ist das Filtermodul 122 insbesondere von einer Filterstellung (siehe Fig. 6) in eine Wechselstellung und/oder aus der Wechselstellung in die Filterstellung bringbar.

Mittels der Transportvorrichtung 204 ist das Filtermodul 122 an derjenigen Position, an welcher es sich in der Wechselstellung befindet, aufnehmbar und abtransportierbar. Ferner ist ein Filtermodul 122 mittels der Transportvorrichtung 204 zu der Filteranlage 112 hintransportierbar, insbesondere derart, dass ein hintransportiertes Filtermodul 122 in die Wechselstellung bringbar ist.

Wie Fig. 1 zu entnehmen ist, kann die Filteranlage 112 eine Wechselvorrichtung 208 zum automatischen Wechseln einzelner oder mehrerer Filterelemente 182 oder einzelner oder mehrerer Filtermodule 122 umfassen.

Die Wechselvorrichtung 208 ist insbesondere als eine Robotervorrichtung 210 ausgebildet und in und entgegen der Förderrichtung 110 längs der Filteranlage 112 beweglich.

Eine solche Wechselvorrichtung 208 kann einseitig oder beidseitig an der Filteranlage 112 vorgesehen sein (in Fig. 1 lediglich einseitig dargestellt).

Die vorstehend beschriebene Lackieranlage 100, insbesondere die vorstehend beschriebene Filteranlage 112, funktioniert wie folgt:
Im Betrieb der Lackieranlage 100 wird die durch die Lackierkabine 106 hindurchgeführte Luft mit Lack-Overspray verunreinigt und als verunreinigter Rohgasstrom der Filteranlage 112 zugeführt.

Der Rohgasstrom strömt dabei teilweise in den Rohgasschacht 142 und durch die Einlassöffnungen 134 in den Seitenwandungen 140 in die Filtermodulaufnahmen 120 hinein.

Ein weiterer Teil des Rohgasstroms, insbesondere ein in der Nähe der Außenwandungen 150 der Lackierkabine 106 und der Filteranlage 112 strömender Teil des Rohgasstroms, fließt vorzugsweise durch die Bypassöffnungen 136, das heißt durch die Einlassöffnungen 134 in den Deckenwandungen 138, der Filtermodulaufnahmen 120 in den Innenraum 126 der Filtermodulaufnahmen 120.

Da die Vorfiltervorrichtungen 186 der Filtermodule 122 direkt an die Einlassöffnungen 134 in den Seitenwandungen 140 der Filtermodulaufnahmen 120 angrenzen, wird der durch diese Einlassöffnungen 134 in den Seitenwandungen 140 einströmende Teil des Rohgasstroms durch die Vorfiltervorrichtungen 186 hindurchgeführt und somit bereits von einem Teil der darin enthaltenen Verunreinigungen befreit.

Nach dem Durchströmen der Vorfiltervorrichtungen 186 wird dieser Teil des Rohgasstroms mit dem durch die Bypassöffnungen 136 hindurchgeführten Rohgasstrom zusammengeführt und den Hauptfiltervorrichtungen 188 zugeführt.

Beim Durchströmen der Hauptfiltervorrichtungen 188 wird der Rohgasstrom weiter gereinigt und im Anschluss hieran zur noch gründlicheren Abscheidung von Verunreinigungen den Nachfiltervorrichtungen 190 zugeführt.

Nach dem Durchströmen sämtlicher Filtervorrichtungen 118 der Filtermodule 122 verlässt der so gereinigte Gasstrom als Reingasstrom die Filtermodulaufnahmen 120 durch die Auslassöffnungen 144 der Filtermodulaufnahmen 120.

Insbesondere gelangt der Reingasstrom dann in den Reingaskanal 160.

In dem Reingaskanal 160 wird der Reingasstrom in der Schwerkraftrichtung g nach unten geführt und dann in horizontaler Richtung den Zusatzfiltervorrichtungen 156 zugeführt.

Nach einer ergänzenden Reinigung des Reingasstroms mittels der Zusatzfiltervorrichtungen 156 gelangt der Reingasstrom in die Sammelkanäle 162 und wird mittels der Sammelkanäle 162 aus der Filteranlage 112 abgeführt.

Nach einer gewissen Betriebsdauer der Lackieranlage 100, insbesondere nach einer gewissen Betriebsdauer der Filteranlage 112, sind die Filterelemente 182 der Filtervorrichtungen 118 mit Verunreinigungen beladen, insbesondere mit Lack-Overspray verunreinigt.

Die Filterleistung der Filterelemente 182 wird hierdurch reduziert. Ferner wird hierdurch ein Strömungswiderstand der Filterelemente 182 erhöht.

Die Filteranlage 112 arbeitet dann nicht mehr mit maximaler Effizienz.

Somit muss in regelmäßigen Abständen ein Austausch der Filterelemente 182 durchgeführt werden, wobei stärker verunreinigte Filterelemente 182 insbesondere durch frische Filterelemente 182 ersetzt werden.

Hierzu werden zunächst die Einlassöffnung 134 in der Deckenwandung 138 und/oder die Auslassöffnung 144 in der Seitenwandung 140 mittels der Ventilvorrichtungen 128 geschlossen. Die Durchströmung der Filtermodulaufnahme 120 wird somit unterbrochen.

Nun kann die Zugangsöffnung 146, insbesondere die Türe 148, geöffnet werden, um das Filtermodul 122 aus der Filterstellung in die Wechselstellung zu bewegen.

In dieser Wechselstellung können einzelne oder mehrere Filterelemente 182 ausgewechselt und durch frische Filterelemente 182 ersetzt werden.

Alternativ hierzu kann vorgesehen sein, dass zunächst die Einlassöffnung 134 in der Deckenwandung 138 geschlossen, dann die Zugangsöffnung 146, insbesondere die Türe 148, geöffnet und danach die Auslassöffnung 144 in der Seitenwandung 140 geschlossen wird. Hierdurch können die Filtermodulaufnahme 120 und/oder das Filtermodul 122 mit Frischluft, insbesondere Umgebungsluft oder Hallenluft, gespült werden, bevor das Filtermodul 120 aus der Filterstellung in die Wechselstellung bewegt wird.

Die Auslassöffnung 144 kann ferner alternativ hierzu auch durchgängig geöffnet bleiben, insbesondere während des gesamten Wechselvorganges.

Im Anschluss an den Filterwechsel kann das Filtermodul 122 zurück in die Filterstellung bewegt werden und steht dann nach Öffnung der Ventilvorrichtungen 128 zum weiteren Filterbetrieb zur Verfügung.

Alternativ hierzu kann nach dem Herausbewegen des Filtermoduls 122 aus der Filterstellung in die Wechselstellung auch vorgesehen sein, dass das gesamte Filtermodul 122 von der Filteranlage 112 entfernt und durch ein frisches Filtermodul 122, das heißt ein Filtermodul 122 mit frischen Filterelementen 182, ausgetauscht wird.

Dies kann insbesondere mittels der Transportvorrichtung 204 und/oder mittels der Wechselvorrichtung 208 erfolgen.

Dadurch, dass die Filtermodulaufnahmen 120 im Wesentlichen voneinander unabhängige Strömungskanäle 130 der Filteranlage 112 bilden, können einzelne Filtermodule 122 oder Filterelemente 182 auch im laufenden Betrieb der Filteranlage 112 gewechselt werden, da bei einem Austausch, das heißt der zwischenzeitigen Abschaltung, einzelner Filtermodule 122 die übrigen Filtermodule 122 die Reinigungsfunktion der Filteranlage 112 weiterhin gewährleisten.

In den Fig. 7 und 8 sind verschiedene Ausführungsformen von Vorfiltervorrichtungen 186 dargestellt, welche je nach Anforderung als Vorfiltervorrichtung 186 der beschriebenen Filtermodule 122 Verwendung finden können.

In Fig. 7 ist eine Vorfiltervorrichtung 186 dargestellt, bei welcher eine einmalige Strömungsumlenkung vorgesehen ist. Eine Bodenwandung 212 sowie ein unterer Abschnitt 214 einer Rückwandung 216 des Filterelements 182 der Vorfiltervorrichtung 186 bilden dabei einen Prallbereich 218, an welchem sich bei der Strömungsumlenkung Verunreinigungen, insbesondere Lack-Overspray-Teilchen, anlagern.

Die in Fig. 8 dargestellte Ausführungsform der Vorfiltervorrichtung 186 unterscheidet sich hiervon im Wesentlichen dadurch, dass das Filterelement 182 eine Zwischenwandung 220 umfasst.

Aufgrund der Zwischenwandung 220 und aufgrund einer anderen Ausgestaltung der Rückwandung 216 ist bei der in Fig. 8 dargestellten Ausführungsform der Vorfiltervorrichtung 186 eine zweifache Strömungsumlenkung vorgesehen.

Dabei dienen die Bodenwandung 212, die Zwischenwandung 220 und ein oberer Abschnitt 222 der Rückwandung 216 als Prallbereiche 218 zur Abscheidung von Verunreinigungen, insbesondere Lack-Overspray-Teilchen.

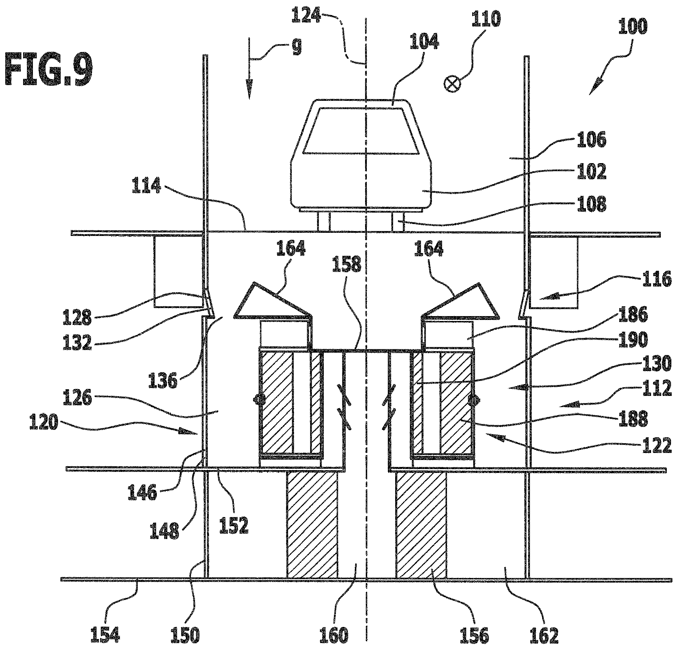

Eine in Fig. 9 dargestellte zweite Ausführungsform einer Lackieranlage 100, insbesondere einer Filteranlage 112, unterscheidet sich von der in den Fig. 1 bis 8 dargestellten Ausführungsform im Wesentlichen dadurch, dass die als Strömungsleitblech 164 dienende Deckenwandung 138 einer jeden Filtermodulaufnahme 120 anstelle der im Wesentlichen horizontalen Ausrichtung geneigt ausgerichtet ist.

Die Strömungsleitbleche 164 der Filteranlage 112 ermöglichen hierdurch eine andere Strömungsführung, insbesondere eine andere Aufteilung des Rohgasstroms auf die Bypassöffnung 136 und die Einlassöffnung 134 in der Seitenwandung 140 einer jeden Filtermodulaufnahme 120.

Im Übrigen stimmt die in Fig. 9 dargestellte zweite Ausführungsform der Lackieranlage 100, insbesondere der Filteranlage 112, hinsichtlich Aufbau und Funktion mit der vorstehend beschriebenen ersten Ausführungsform überein, so dass auf deren vorstehende Beschreibung insoweit Bezug genommen wird.

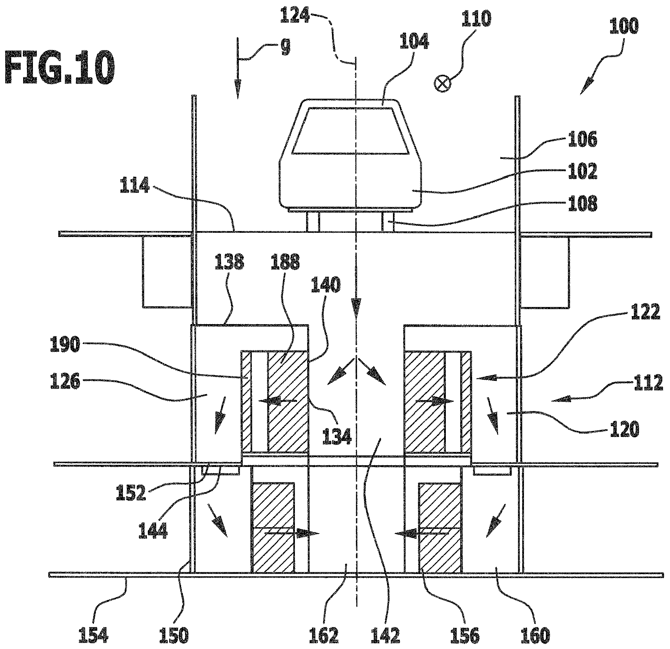

Eine in Fig. 10 dargestellte dritte Ausführungsform einer Lackieranlage 100, insbesondere einer Filteranlage 112, unterscheidet sich von der in den Fig. 1 bis 8 dargestellten ersten Ausführungsform im Wesentlichen dadurch, dass der Rohgasschacht 142 sich über die gesamte Höhe der Filtermodulaufnahme 120 erstreckt und lediglich eine einzige Einlassöffnung 134, nämlich eine Einlassöffnung 134 in der Seitenwandung 140 einer jeden Filtermodulaufnahme 120 vorgesehen ist.

Die Deckenwandung 138 einer jeden Filtermodulaufnahme 120 weist somit eine geschlossene Fläche auf.

An die Einlassöffnung 134 in der Seitenwandung 140 schließt sich unmittelbar die Hauptfiltervorrichtung 188 an, auf welche in der Strömungsrichtung die Nachfiltervorrichtung 190 folgt.

Bei der in Fig. 10 dargestellten dritten Ausführungsform der Lackieranlage 100 ist somit keine Vorfiltervorrichtung 186 vorgesehen.

Die Auslassöffnung 144 einer jeden Filtermodulaufnahme 120 ist in einer die Filtermodulaufnahme 120 nach unten hin begrenzenden Ebene 152 angeordnet.

Die Auslassöffnung 144 ist dabei auf der der vertikalen Längsmittelebene 124 abgewandten Seite des Filtermoduls 122 angeordnet.

Durch die Auslassöffnung 144 gelangt der Reingasstrom auf die der vertikalen Längsmittelebene 124 abgewandte Seite einer Zusatzfiltervorrichtung 156.

Die Zusatzfiltervorrichtung 156 wird somit in einer auf die vertikale Längsmittelebene 124 zu gerichteten Richtung durchströmt.

Im Bereich der Längsmittelebene 124 zwischen den Zusatzfiltervorrichtungen 156 der Filteranlage 112 ist ein Sammelkanal 162 angeordnet, durch welchen das aus sämtlichen Filtermodulen 122 abgeführte Reingas zentral abgeführt wird.

Die in Fig. 10 dargestellte dritte Ausführungsform der Lackieranlage 100, insbesondere der Filteranlage 112, kann den Vorteil bieten, dass die Filtermodule 122 durch die Zugangsöffnungen 146 von einer Reingasseite der Filteranlage 112 her zugänglich sind.

Die Gefahr des unerwünschten Austritts von verunreinigtem Rohgas bei einem Öffnen der Zugangsöffnung 146, insbesondere der Türe 148, zum Wechseln der Filtermodule 122 wird hierdurch vorzugsweise reduziert.

Im Übrigen stimmt die in Fig. 10 dargestellte dritte Ausführungsform der Lackieranlage 100, insbesondere der Filteranlage 112, hinsichtlich Aufbau und Funktion mit der in den Fig. 1 bis 8 dargestellten ersten Ausführungsform überein, so dass auf deren vorstehende Beschreibung insoweit Bezug genommen wird.

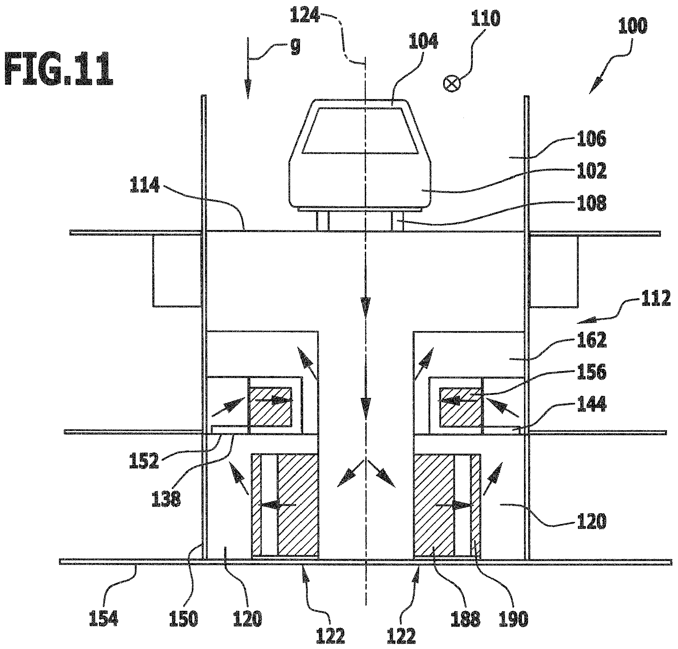

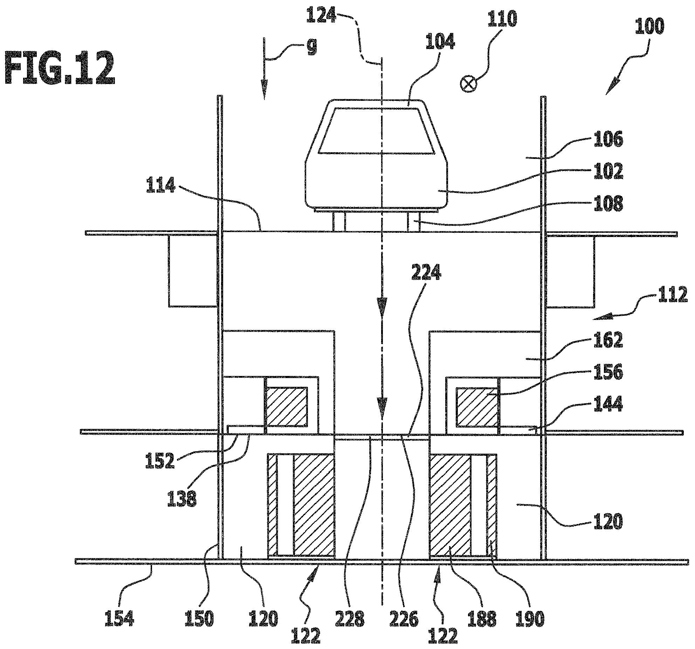

Eine in den Fig. 11 und 12 dargestellte vierte Ausführungsform einer Lackieranlage 100, insbesondere einer Filteranlage 112, unterscheidet sich von der in den Fig. 1 bis 8 dargestellten ersten Ausführungsform im Wesentlichen dadurch, dass der Rohgasschacht 142 sich längs der vertikalen Längsmittelebene 124 bis auf einen Boden 154 der Filteranlage 112 erstreckt.

Die Filtermodulaufnahmen 120 sind ebenfalls auf dem Boden 154 der Filteranlage 112 angeordnet und werden entsprechend der in Fig. 10 dargestellten dritten Ausführungsform von innen nach außen mit Rohgas durchströmt.

Das nach dem Durchströmen der Filtermodule 122 erhaltene Reingas wird über in der Deckenwandung 138 angeordnete Auslassöffnungen 144 der Filtermodulaufnahmen 120 abgeführt.

Über den Filtermodulaufnahmen 120 sind Zusatzfiltervorrichtungen 156 und Sammelkanäle 162 angeordnet, um das Reingas weiter zu reinigen und schließlich aus der Filteranlage 112 abzuführen.

Wie insbesondere Fig. 12 zu entnehmen ist, umfasst die Lackieranlage 100 gemäß der in den Fig. 11 und 12 dargestellten vierten Ausführungsform vorzugsweise eine Brandschutzeinrichtung 224.

Die Brandschutzeinrichtung 224 kann insbesondere Klappenelemente 226 oder Schiebeelemente 228 umfassen, welche im Falle eines Brandes in den Rohgasschacht 142 einbringbar sind, um diesen zu verschließen.

Die Klappenelemente 226 oder Schiebeelemente 228 können insbesondere Verlängerungen von Wandungen der Filtermodulaufnahmen 120 sein, welche bei Bedarf in den Rohgasschacht 142 einbringbar, insbesondere hineinklappbar oder hineinschiebbar, sind.

Die Klappenelemente 226 oder die Schiebeelemente 228 sind vorzugsweise einzelnen Filtermodulaufnahmen 120 zugeordnet und können somit vorzugsweise auch unabhängig von den Klappenelementen 226 oder Schiebeelementen 228 der anderen Filtermodulaufnahmen 120 im Bereich einzelner Filtermodulaufnahmen 120 in den Rohgasschacht 142 eingebracht werden. Hierdurch kann dieser Bereich beim Filterwechsel vor einer unerwünschten Verunreinigung geschützt und das zugehörige Filtermodul 122 komfortabel und mit möglichst geringen Verunreinigungen ausgetauscht werden.

Insbesondere zur Optimierung des Brandschutzes sind vorzugsweise sämtliche Wandungen der Filtermodulaufnahme 120 und/oder der Filteranlage 112 Brandschutzwände.

Im Übrigen stimmt die in den Fig. 11 und 12 dargestellte vierte Ausführungsform einer Lackieranlage 100, insbesondere einer Filteranlage 112, hinsichtlich Aufbau und Funktion mit der in den Fig. 1 bis 8 dargestellten ersten Ausführungsform überein, so dass auf deren vorstehende Beschreibung insoweit Bezug genommen wird.

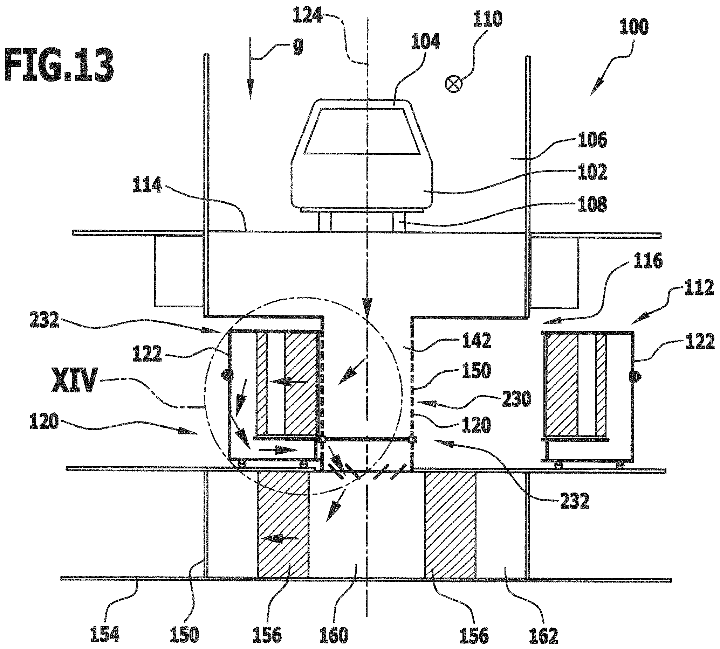

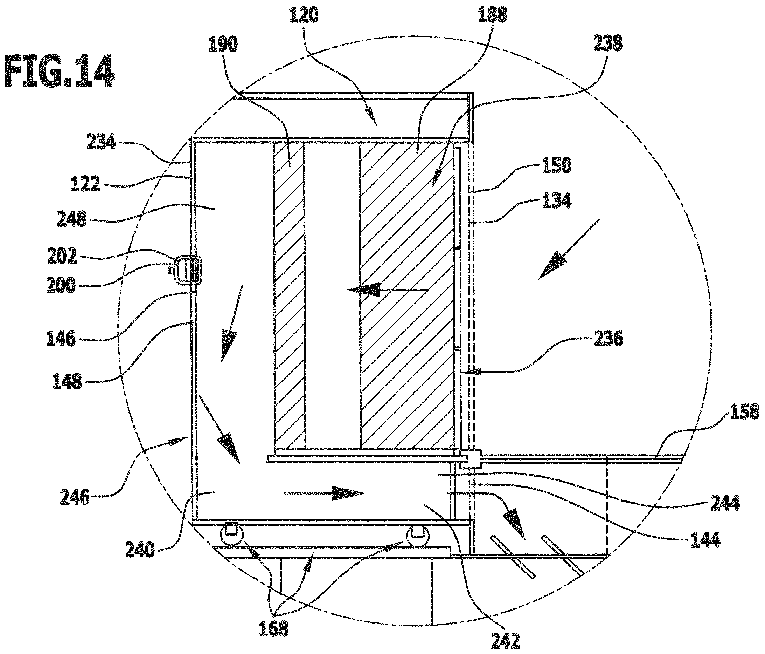

Eine in den Fig. 13 und 14 dargestellte fünfte Ausführungsform einer Lackieranlage 100, insbesondere einer Filteranlage 112, unterscheidet sich von der in den Fig. 1 bis 8 dargestellten ersten Ausführungsform im Wesentlichen dadurch, dass die Filtermodulaufnahmen 120 als Anlagebereiche 230 an den Außenwandungen 150 der Filteranlage 112, insbesondere der Grundkonstruktion 116 der Filteranlage 112, ausgebildet sind.

Die Außenwandungen 150 sind dabei mit Einbuchtungen 232 versehen, in welchen die Filtermodule 122 anordenbar sind.

Die Einbuchtungen 232 sind offen ausgebildet. Im Filterbetrieb der Filteranlage 112 sind die Filtermodule 122 somit von außerhalb der Filteranlage 112 zugänglich.

Die Seitenwand 140 der Filtermodulaufnahme 120, welche zugleich die Außenwandung 150 der Grundkonstruktion 116 ist, umfasst bei der in den Fig. 13 und 14 dargestellten Ausführungsform der Filteranlage 112 eine Einlassöffnung 134 und eine Auslassöffnung 144.

Die Einlassöffnung 134 und die Auslassöffnung 144 sind dabei bezüglich der Schwerkraftrichtung g übereinander angeordnet und mittels einer Trennwand 158 voneinander getrennt.

Die Einlassöffnung 134 ist dabei über der Auslassöffnung 144 angeordnet.

Die an die Anlagebereiche 230 anlegbaren Filtermodule 122 umfassen jeweils eine Hauptfiltervorrichtung 188 und jeweils eine Nachfiltervorrichtung 190.

Bei einer (nicht dargestellten) weiteren Ausführungsform kann zudem eine Vorfiltervorrichtung 186 vorgesehen sein.

Die Filtermodule 122 umfassen jeweils ein Gehäuse 234, welches insbesondere fünfseitig fluiddicht geschlossen oder schließbar ist.

Eine in der Filterstellung der Filtermodule 122 an der Seitenwandung 140 der Filtermodulaufnahme 120 anliegende Vorderseite 236 des Gehäuses 234 ist vorzugsweise geöffnet ausgebildet und an die Einlassöffnung 134 sowie an die Auslassöffnung 144 anlegbar.

Die Filtermodulaufnahme 120 und/oder das Filtermodul 122 umfasst zwei Flanschbereiche, welche die Einlassöffnung 134 und die Auslassöffnung 144 umgeben und die Filtermodulaufnahme 120 und das zugehörige Filtermodul 122 gegenüber einer Umgebung der Filteranlage 112 abdichten.

Jedes Filtermodul 122 umfasst einen Einströmabschnitt 238, welcher sich an die Einlassöffnung 134 anschließt, einen Umkehrabschnitt 240 zur Strömungsumkehrung, einen Rückführabschnitt 242 zur Rückführung des Gasstroms in Richtung der Vorderseite 236 des Filtermoduls 122 sowie einen Ausströmabschnitt 244, durch welchen der Gasstrom der Auslassöffnung 144 zuführbar ist.

Der Einströmabschnitt 238 ist entsprechend der Anordnung der Einlassöffnung 134 und der Auslassöffnung 144 über dem Ausströmabschnitt 244 angeordnet.

Der Rückführabschnitt 242 ist insbesondere unter der Hauptfiltervorrichtung 188 und der Nachfiltervorrichtung 190 angeordnet.

Der Umkehrabschnitt 240 ist insbesondere im Bereich einer der Vorderseite 236 des Filtermoduls 122 gegenüberliegend angeordneten Rückseite 246 des Filtermoduls 122 angeordnet.

Die Rückseite 246 des Filtermoduls 122 umfasst insbesondere eine Zugangsöffnung 146, beispielsweise eine Türe 148, durch welche ein Innenraum 248 des Filtermoduls 122 zugänglich ist. Hierdurch können die Filterelemente 182 der Nachfiltervorrichtung 190 und/oder der Hauptfiltervorrichtung 188 zum einfachen Austausch derselben zugänglich sein.

Wie insbesondere Fig. 14 zu entnehmen ist, ist bei der in den Fig. 13 und 14 dargestellten Ausführungsform der Filteranlage 112 die Führungsvorrichtung 168 außerhalb eines von einem Gasstrom durchströmten Bereichs der Filteranlage 112 angeordnet. Eine unerwünschte Verunreinigung der Führungsvorrichtung 168 im Filterbetrieb der Filteranlage 112 kann hierdurch reduziert oder ganz vermieden werden.

Im Übrigen stimmt die in den Fig. 13 und 14 dargestellte fünfte Ausführungsform der Lackieranlage 100, insbesondere der Filteranlage 112, hinsichtlich Aufbau und Funktion mit der in den Fig. 1 bis 8 dargestellten ersten Ausführungsform überein, so dass auf deren vorstehende Beschreibung insoweit Bezug genommen wird.

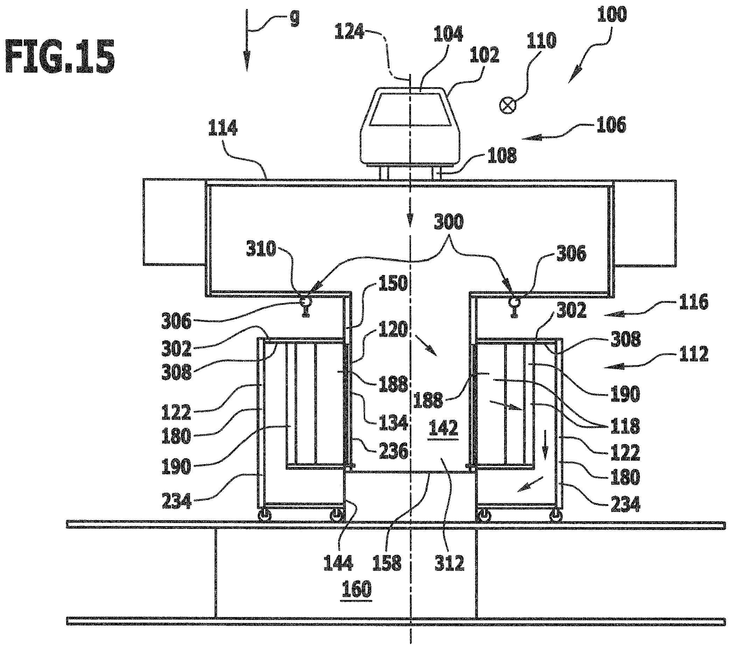

Eine in den Fig. 15 bis 17 dargestellte sechste Ausführungsform einer Lackieranlage 100 unterscheidet sich von der in den Fig. 13 und 14 dargestellten fünften Ausführungsform im Wesentlichen dadurch, dass die Lackieranlage 100, insbesondere die Filteranlage 112, eine Feuerschutzvorrichtung 300 umfasst.

Mittels der Feuerschutzvorrichtung 300 ist insbesondere ein Brand in der Filteranlage 112 verhinderbar, eindämmbar und/oder löschbar.

Die Feuerschutzvorrichtung 300 umfasst dabei ein oder mehrere Feuerschutzelemente 302 zur Beeinflussung einer Flammenausbreitung im Brandfall.

Die Feuerschutzelemente 302 können dabei einerseits eine Ausbreitung des Feuers verlangsamen, insbesondere wenn die Feuerschutzelemente 302 aus einem brandhemmenden Material mit hoher Feuerwiderstandsklasse gebildet sind.

Bei der in den Fig. 15 bis 17 dargestellten sechsten Ausführungsform der Lackieranlage 100 sind die Feuerschutzelemente 302 jedoch aus einem Material gebildet, welches durch Einwirkung von Wärme und/oder durch Kontakt mit einem Reaktionsstoff auflösbar, verflüssigbar und/oder verbrennbar ist.

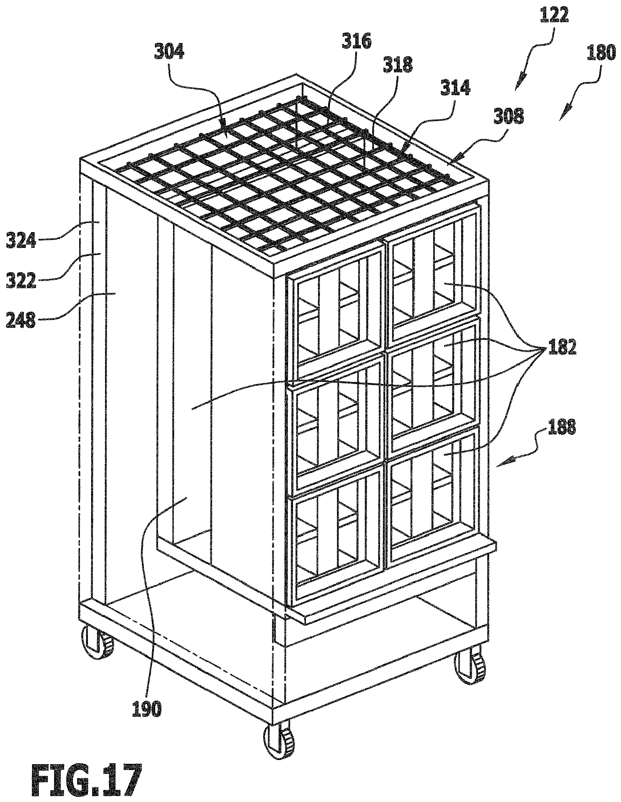

Das Material der Feuerschutzelemente 302 ist insbesondere so gewählt, dass im Brandfall die Feuerschutzelemente 302 entfernt oder sonstwie beseitigt werden können, um eine Zugangsöffnung oder Durchtrittsöffnung freizugeben. Die Zugangsöffnung oder Durchtrittsöffnung bildet dann insbesondere eine Löschöffnung 304, durch welche ein Innenraum 248 der Filtermodule 122 zugänglich ist (siehe Fig. 17).

Die Feuerschutzvorrichtung 300 umfasst ferner eine Applikationsvorrichtung 306, mittels welcher ein Löschmaterial und/oder ein Reaktionsstoff abgebbar ist.

Die Applikationsvorrichtung 306 ist bei der in den Fig. 15 bis 17 dargestellten sechsten Ausführungsform der Lackieranlage 100 direkt über den Filtermodulen 122 angeordnet, so dass das Löschmaterial und/oder der Reaktionsstoff von oben auf eine Deckenwandung 308 der Filtermodule 122 abgegeben werden kann.

Die Applikationsvorrichtung 306 ist insbesondere als eine Sprinklervorrichtung 310 ausgebildet, mittels welcher flüssiges, schaumartiges oder pulverförmiges Löschmaterial und/oder flüssiger, schaumartiger oder pulverförmiger Reaktionsstoff abgebbar ist.

Wie insbesondere Fig. 15 zu entnehmen ist, ist die Applikationsvorrichtung 306 außerhalb eines Rohgasraums 312 der Filteranlage 112 und außerhalb der Filtermodule 122 angeordnet. Eine unerwünschte Verunreinigung der Applikationsvorrichtung 306 im Normalbetrieb (Filterbetrieb) der Filteranlage 112 kann hierdurch verhindert werden.

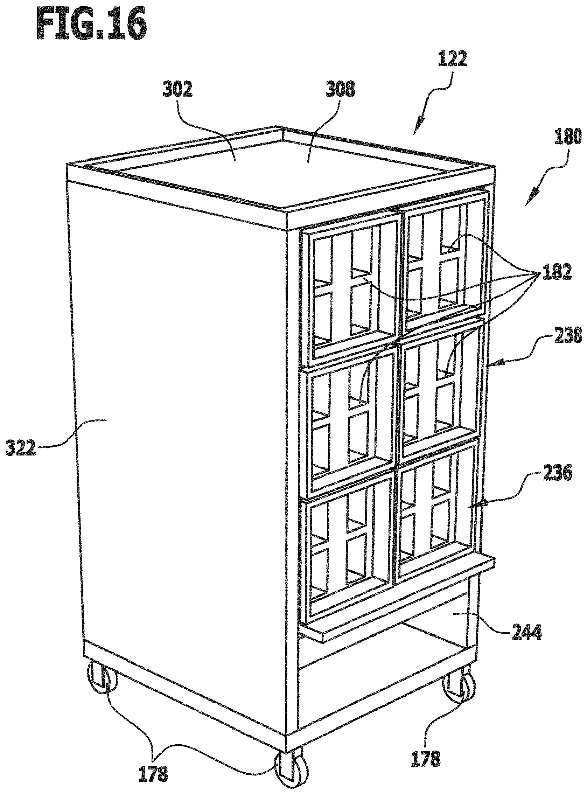

Wie insbesondere den Fig. 16 und 17 zu entnehmen ist, umfasst die Deckenwandung 308 eines jeden Filtermoduls 122 eine Aufnahme 314 zur Aufnahme eines oder mehrerer Feuerschutzelemente 302.

Die Aufnahme 314 umfasst dabei insbesondere eine Stabilisationsvorrichtung 316 zur zuverlässigen und stabilen Aufnahme und/oder Anordnung des einen oder der mehreren Feuerschutzelemente 302.

Die Stabilisationsvorrichtung 316 ist beispielsweise als ein Gitter 318 ausgebildet, auf welche das eine oder die mehreren Feuerschutzelemente 302 auflegbar sind.

Die in den Fig. 15 bis 17 dargestellte sechste Ausführungsform einer Lackieranlage 100, insbesondere die Feuerschutzvorrichtung 300, funktioniert wie folgt:
Im Falle eines Brands in der Filteranlage 112 kann sich ein Feuer innerhalb der Filteranlage 112 ausbreiten.

Mittels Feuerschutzelementen 302 der Feuerschutzvorrichtung 300 kann die Ausbreitung des Feuers, insbesondere die Feuerausbreitungsgeschwindigkeit (Brandausbreitungsgeschwindigkeit), gezielt beeinflusst werden.

Beispielsweise kann mittels als brandhemmenden Zwischenwänden ausgebildeten Feuerschutzelementen 302 ein Brandübergriff von einzelnen Filtermodulen 122 auf benachbarte Filtermodule 122 verhindert oder zumindest verlangsamt werden.

Zudem kann mittels Feuerschutzelementen 302, welche aus einem Material gebildet sind, das durch Wärmeeinwirkung (Hitzeeinwirkung) und/oder durch Kontakt mit einem Reaktionsstoff auflösbar, verflüssigbar und/oder verbrennbar ist, gezielt ein Zugang zu einem Innenraum 248 der Filtermodule 122 freigegeben werden.

Insbesondere können durch Entfernen der Feuerschutzelemente 302 eine oder mehrere Löschöffnungen 304 in einer Deckenwandung 308 der Filtermodule 122 freigegeben werden.

Die Feuerschutzelemente 302 sind hierzu beispielsweise aus einem schmelzbaren oder brennbaren Material gebildet. Insbesondere kann vorgesehen sein, dass die Feuerschutzelemente 302 aus Karton gebildet sind und somit im Brandfall verbrennen, um die Löschöffnungen 304 freizugeben.

Alternativ hierzu kann mittels der Applikationsvorrichtung 306 ein Reaktionsstoff auf das eine oder die mehreren Feuerschutzelemente 302 abgegeben werden, um das eine oder die mehreren Feuerschutzelemente 302 aufzulösen oder sonstwie zu beseitigen. Auch hierdurch können eine oder mehrere Löschöffnungen 304 in den Deckenwandungen 308 der Filtermodule 122 freigegeben werden.

Nach Freigabe der Löschöffnungen 304 ist insbesondere ein Innenraum 248 der Filtermodule 122 zugänglich, so dass mittels der Applikationsvorrichtung 306 durch die Löschöffnungen 304 hindurch Löschmaterial in die Filtermodule 122 eingebracht werden kann.

Mittels des Löschmaterials kann dann insbesondere das Feuer eingedämmt und gelöscht werden.

Im Übrigen stimmt die in den Fig. 15 bis 17 dargestellte sechste Ausführungsform einer Lackieranlage 100 hinsichtlich Aufbau und Funktion mit der in den Fig. 13 und 14 dargestellten fünften Ausführungsform überein, so dass auf deren vorstehende Beschreibung insoweit Bezug genommen wird.

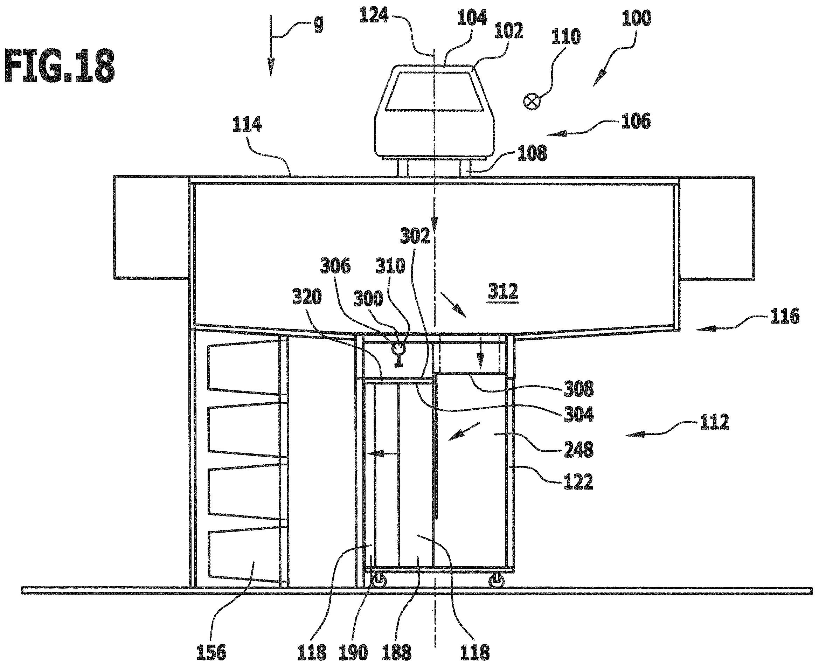

Eine in Fig. 18 dargestellte siebte Ausführungsform einer Lackieranlage 100 unterscheidet sich von der in den Fig. 15 bis 17 dargestellten sechsten Ausführungsform im Wesentlichen dadurch, dass lediglich eine einzige Reihe von mittig angeordneten Filtermodulen 122 vorgesehen ist. Eine solche Ausgestaltung ist insbesondere dann sinnvoll, wenn die Overspraymenge in der Lackierkabine 106 eher gering ausfällt.

Bei dieser siebten Ausführungsform der Lackieranlage 100 strömt der Rohgasstrom im Wesentlichen vertikal von oben durch die Deckenwandung 308 des jeweiligen Filtermoduls 122 in das jeweilige Filtermodul 122 ein. Im Anschluss daran durchströmt der Rohgasstrom zwei Filtervorrichtungen 118, nämlich eine Hauptfiltervorrichtung 188 und eine Nachfiltervorrichtung 190, welche Bestandteil des jeweiligen Filtermoduls 122 sind.

Der aus den Filtermodulen 122 ausströmende Gasstrom wird schließlich noch durch eine Zusatzfiltervorrichtung 156 geführt und schließlich als Reingasstrom abgeführt.

Eine Feuerschutzvorrichtung 300 ist auch bei der in Fig. 18 dargestellten siebten Ausführungsform einer Lackieranlage 100 vorgesehen. Diese ist insbesondere direkt über einer Zwischenwand 320 der Filteranlage 112 angeordnet.

Die Zwischenwand 320 kann dabei Bestandteil der Deckenwandung 308, insbesondere ein Teil der Deckenwandung 308, eines jeden Filtermoduls 122 sein. Es kann jedoch auch vorgesehen sein, dass die Zwischenwand 320 Bestandteil der Grundkonstruktion 116 der Filteranlage 112 ist.

Die Zwischenwand 320 trennt insbesondere denjenigen Bereich oder Innenraum 248 des jeweiligen Filtermoduls 122, in welchem die Filtervorrichtungen 118 angeordnet sind, von demjenigen Raum der Filteranlage 112, in welchem die Applikationsvorrichtung 306 der Feuerschutzvorrichtung 300 angeordnet ist. Auch bei der in Fig. 18 dargestellten siebten Ausführungsform der Lackieranlage 100 ist die Applikationsvorrichtung 306 somit vorzugsweise außerhalb eines Gasstroms, insbesondere außerhalb des Rohgasraums 312, angeordnet.

Im Brandfall ist das die Zwischenwand 320 bildende Feuerschutzelement 302 entfernbar, um einen Zugang zu dem Innenraum 248 der Filtermodule 122 freizugeben.

Insbesondere kann somit durch Entfernen des Feuerschutzelements 302 eine Löschöffnung 304 eines jeden Filtermoduls 122 freigegeben werden.

Mittels der Applikationsvorrichtung 306 ist dann Löschmaterial in den Innenraum 248 des jeweiligen Filtermoduls 122 abgebbar, insbesondere um ein darin vorhandenes Feuer einzudämmen oder zu löschen.

Im Übrigen stimmt die in Fig. 18 dargestellte siebte Ausführungsform einer Lackieranlage 100 hinsichtlich Aufbau und Funktion mit der in den Fig. 15 bis 17 dargestellten sechsten Ausführungsform überein, so dass auf deren vorstehende Beschreibung insoweit Bezug genommen wird.

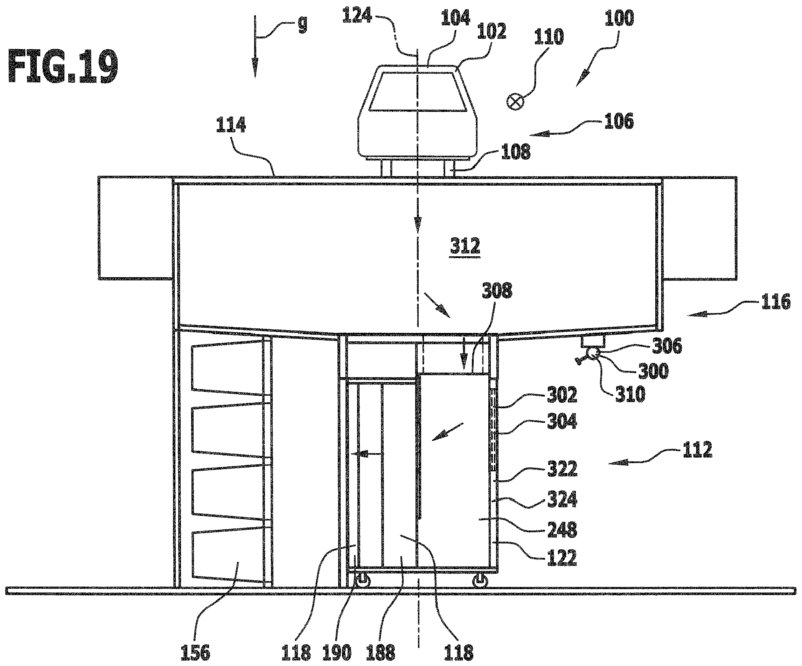

Eine in Fig. 19 dargestellte achte Ausführungsform einer Lackieranlage 100 unterscheidet sich von der in Fig. 18 dargestellten siebten Ausführungsform im Wesentlichen dadurch, dass die Applikationsvorrichtung 306 der Feuerschutzvorrichtung 300 seitlich versetzt oberhalb der Filtermodule 122 angeordnet ist.

Die Applikationsvorrichtung 306 ist dabei so angeordnet und ausgerichtet, dass ein Löschmaterial und/oder ein Reaktionsstoff auf eine oder mehrere Seitenwandungen 322 der Filtermodule 122 abgegeben werden kann.

Insbesondere kann Löschmaterial und/oder ein Reaktionsstoff auf eine oder mehrere Rückwandungen 324 eines oder mehrerer Filtermodule 122 abgegeben werden.

Die mittels Feuerschutzelementen 302 zunächst abgedeckten Löschöffnungen 304 und somit auch die zugehörigen Aufnahmen 314 sind entsprechend an den Seitenwandungen 322, insbesondere an den Rückwandungen 324, der Filtermodule 122 angeordnet.

Nach einem Freigeben der Löschöffnungen 304 durch Entfernen der Feuerschutzelemente 302 kann somit insbesondere Löschmaterial seitlich in den Innenraum 248 der Filtermodule 122 eingebracht werden, um ein Feuer einzudämmen oder zu löschen.

Im Übrigen stimmt die in Fig. 19 dargestellte achte Ausführungsform einer Lackieranlage 100 hinsichtlich Aufbau und Funktion mit der in Fig. 18 dargestellten siebten Ausführungsform überein, so dass auf deren vorstehende Beschreibung insoweit Bezug genommen wird.

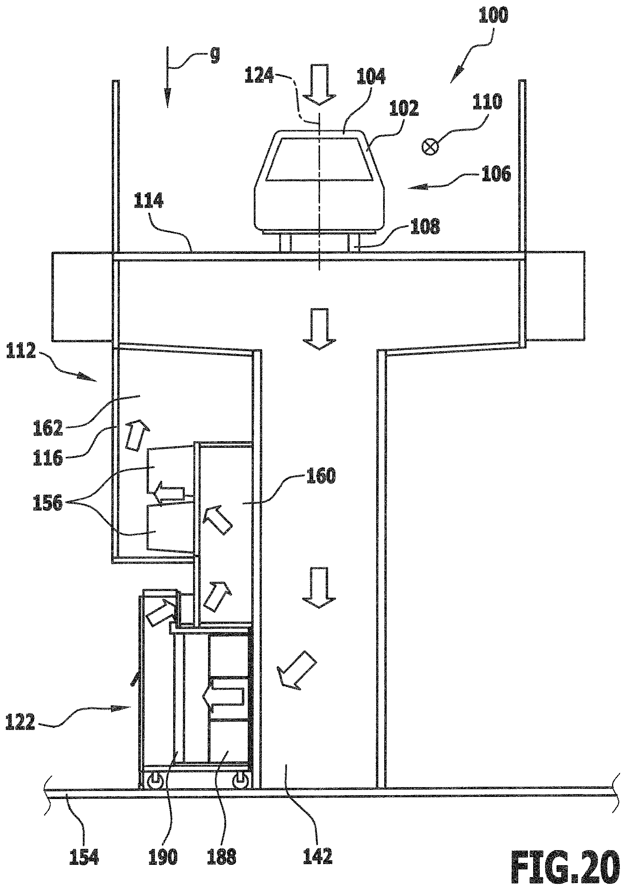

Eine in Fig. 20 dargestellte neunte Ausführungsform einer Lackieranlage 100 unterscheidet sich von der in den Fig. 13 und 14 dargestellten fünften Ausführungsform im Wesentlichen dadurch, dass die Filtermodule 122 auf dem Boden 154, auf dem die gesamte Lackieranlage 100 aufgebaut ist, verfahrbar angeordnet sind.

Vorzugsweise sind sämtliche Filtermodule 120 auf derselben Seite des zentralen Rohgasschachts 142 angeordnet.

Die Filtermodule 120 umfassen vorzugsweise jeweils eine Hauptfiltervorrichtung 188 und eine Nachfiltervorrichtung 190.

Oberhalb dieser Filtervorrichtungen 188, 190 ist ein mittels der Filtervorrichtungen 188, 190 gereinigter Reingasstrom aus den Filtermodulen 122 abführbar.

Insbesondere ist der Reingasstrom bei der in Fig. 20 dargestellten neunten Ausführungsform über einen Reingaskanal 160 einer oder mehreren Zusatzfiltervorrichtungen 156 zuführbar.

Die Zusatzfiltervorrichtungen 156 sind insbesondere stationär an der Grundkonstruktion 116 angeordnet und dienen vorzugsweise als Polizeifilter oder Zusatzfilter zur Vermeidung einer unerwünschten Verunreinigung der Reingasseite der Lackieranlage 100.

Der durch die Zusatzfiltervorrichtungen 156 hindurchgeführte Reingasstrom ist dem Sammelkanal 162 zuführbar, welchem insbesondere Reingas aus sämtlichen Filtermodulen 122 zuführbar ist.

Mittels des Sammelkanals 162 kann das Reingas schließlich aus der Filteranlage 112 abgeführt und beispielsweise einer weiteren Verwendung zugeführt werden.

Der Sammelkanal 162 ist bei der in Fig. 20 dargestellten neunten Ausführungsform der Lackieranlage 100, insbesondere der Filteranlage 112, oberhalb der Filtermodule 122 angeordnet. Insbesondere ist der Sammelkanal 162 direkt über den Filtermodulen 122 angeordnet.

Der Sammelkanal 162 und die Filtermodule 122 sind somit in vertikaler Richtung aufeinander folgend angeordnet.

Dabei kann ein Abstand zwischen dem Sammelkanal 162 und den Filtermodulen 122 vorgesehen sein, welcher beispielsweise mittels eines oder mehrerer Reingaskanäle 160 überbrückt werden kann. Es kann jedoch auch vorgesehen sein, dass der Sammelkanal 162 in vertikaler Richtung unmittelbar an die Filtermodule 122 angrenzt.

Im Übrigen stimmt die in Fig. 20 dargestellte neunte Ausführungsform einer Lackieranlage 100 hinsichtlich Aufbau und Funktion mit der in den Fig. 13 und 14 dargestellten fünften Ausführungsform überein, so dass auf deren vorstehende Beschreibung insoweit Bezug genommen wird.

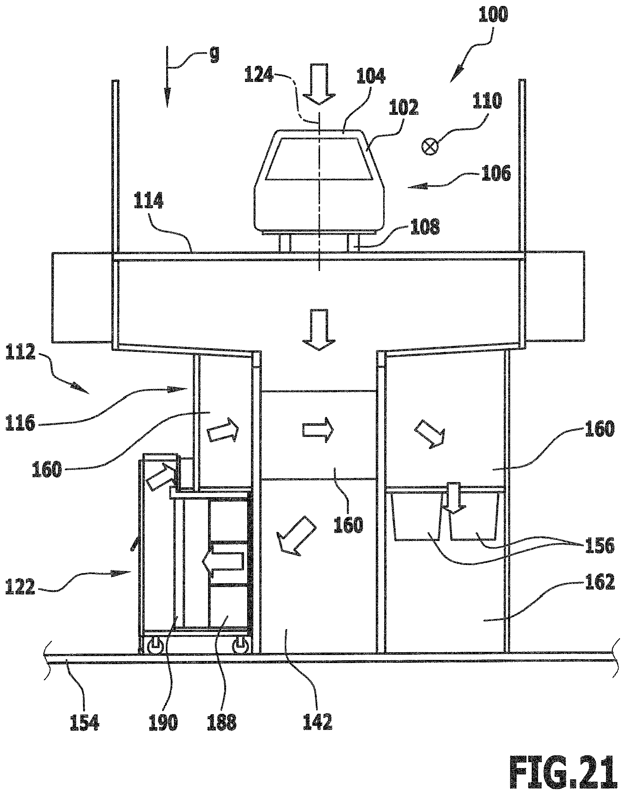

Eine in Fig. 21 dargestellte zehnte Ausführungsform einer Lackieranlage 100, insbesondere einer Filteranlage 112, unterscheidet sich von der in Fig. 20 dargestellten neunten Ausführungsform im Wesentlichen dadurch, dass der eine oder die mehreren Reingaskanäle 160 den Rohgasschacht 142 queren und somit im Betrieb der Filteranlage 112 von Rohgas umströmt werden.

Die Filtermodule 122 einerseits und der Sammelkanal 162 andererseits sind dabei auf einander gegenüberliegenden Seiten des zentralen Rohgasschachts 142 angeordnet.

Insbesondere ist der Sammelkanal 162 bezüglich der vertikalen Richtung (Schwerkraftrichtung g) im Wesentlichen auf derselben Höhe angeordnet wie die Filtermodule 122.

Im Übrigen stimmt die in Fig. 21 dargestellte zehnte Ausführungsform der Lackieranlage 100 hinsichtlich Aufbau und Funktion mit der in Fig. 20 dargestellten neunten Ausführungsform überein, so dass auf deren vorstehende Beschreibung insoweit Bezug genommen wird.

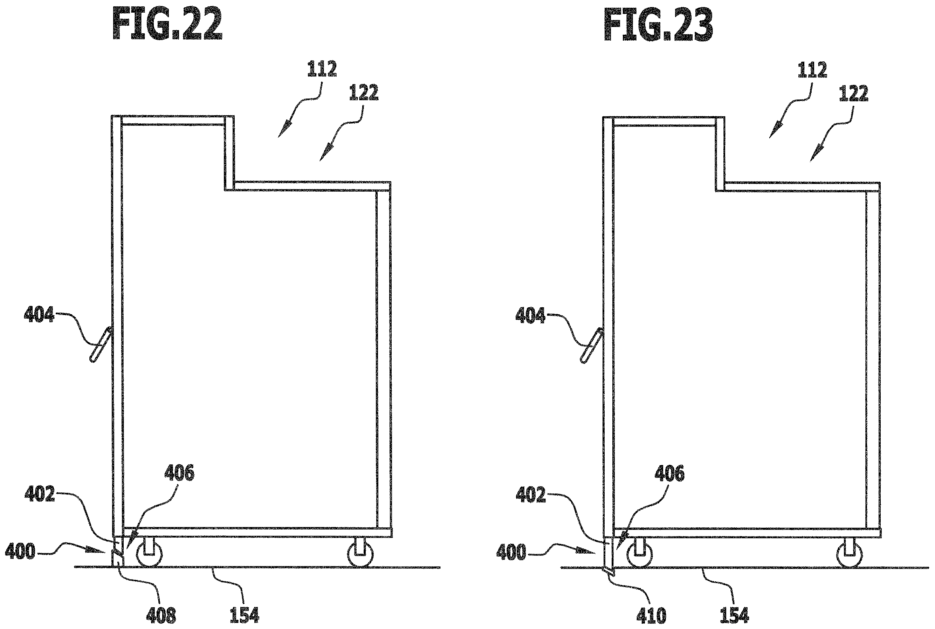

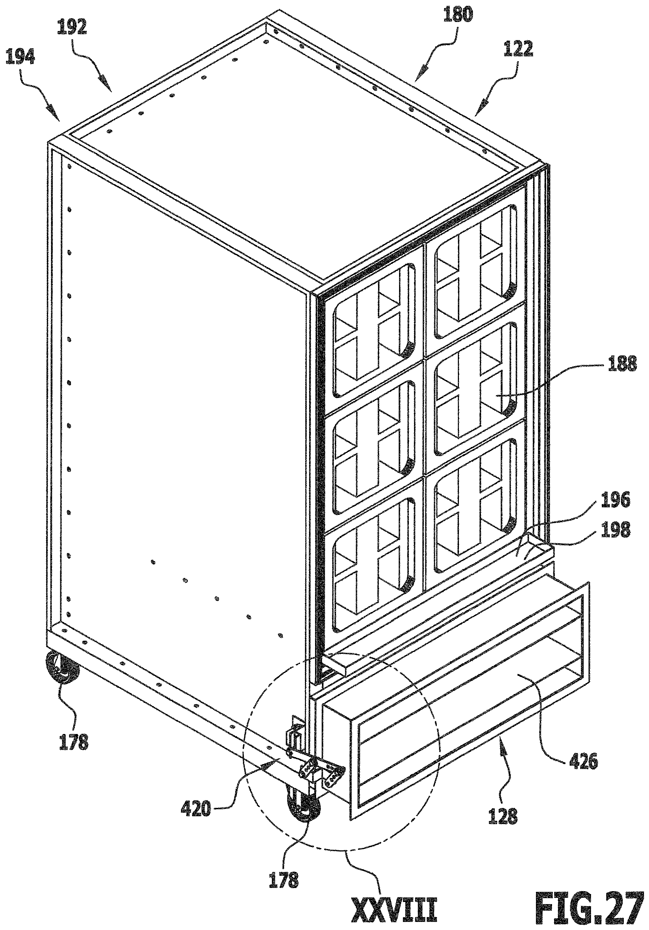

Nachfolgend werden einzelne Merkmale unterschiedlicher Ausführungsformen von Filtermodulen 122 und/oder Filtermodulaufnahmen 120 anhand der Fig. 22 bis 28 erläutert. Diese Merkmale können wahlweise jeweils für sich genommen oder in Kombination miteinander alternativ oder ergänzend zu einzelnen oder mehreren der vorstehend beschriebenen Merkmale der Filtermodule 122 bzw. der Filtermodulaufnahmen 120 vorgesehen sein.

Bei der in Fig. 22 dargestellten Ausführungsform des Filtermoduls 122 ist eine Arretiervorrichtung 400 vorgesehen, mittels welcher das Filtermodul 120 in einer gewünschten Position, insbesondere einer Filterposition an der Filtermodulaufnahme 120, arretierbar ist.

Die Arretiervorrichtung 400 umfasst insbesondere ein beispielsweise als Treibriegelstange ausgebildetes Arretierelement 402, welches mittels eines Griffs 404 der Arretiervorrichtung 400 betätigbar ist. An seinem bezüglich der Schwerkraftrichtung g unteren Ende umfasst das Arretierelement 402 eine Schrägfläche 406, welche mit einer Schrägfläche 406 in einem Vorsprung 408 auf dem Boden 154 in Eingriff bringbar ist.

Die Schrägflächen 406 sind dabei insbesondere so relativ zueinander ausgerichtet, dass das Filtermodul 122 bei einer Betätigung des Arretierelements 402 mittels des Griffs 404 an die Filtermodulaufnahme 120 angepresst wird.

Bei der in Fig. 23 dargestellten Ausführungsform eines Filtermoduls 122 ist die Schrägfläche 406 des Arretierelements 402 mit einer Schrägfläche 406 in einer Vertiefung 410 in dem Boden 154 in Eingriff bringbar. Aufgrund einer solchen Vertiefung 410 kann insbesondere ein möglicherweise störender Vorsprung 408 auf dem Boden 154 vermieden werden. In funktionaler Hinsicht entspricht die Vertiefung 410 jedoch im Wesentlichen dem Vorsprung 408.

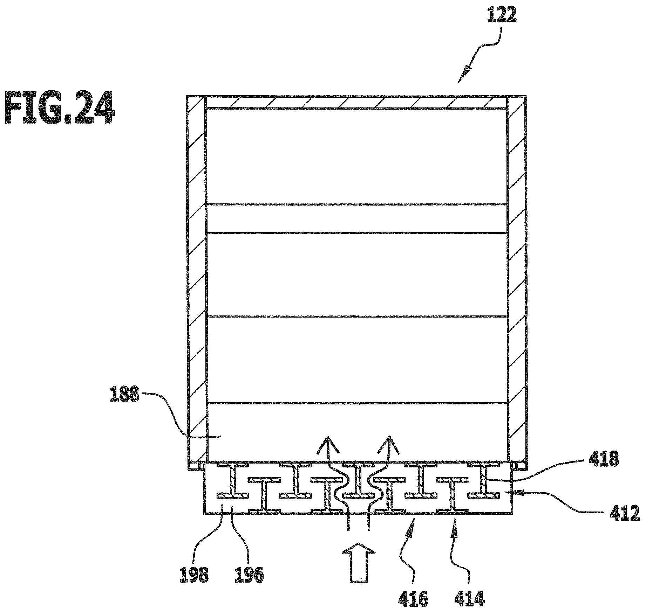

Gemäß der in Fig. 24 dargestellten alternativen Ausführungsform eines Filtermoduls 122 kann vorgesehen sein, dass ein Filtermodul 122 eine Vorabscheidevorrichtung 412 umfasst.

Eine solche Vorabscheidevorrichtung 412 kann insbesondere als ein Labyrinthfilter 414 oder Trägheitsfilter 416 ausgebildet sein.

Bei einer derartigen Vorabscheidevorrichtung 412 erfolgt vorzugsweise eine einfache oder mehrfache Strömungsumkehrung oder Strömungsumlenkung, so dass insbesondere schwere Verunreinigungen einem durch die Vorabscheidevorrichtung 412 hindurchgeführten Gasstrom nicht folgen können und an Abscheideelementen 418 der Vorabscheidevorrichtung 412 anhaften und somit aus dem Rohgasstrom abgeschieden werden.

Die Abscheideelemente 418 können dabei insbesondere einen im Wesentlichen I-förmigen oder Doppel-T-förmigen Querschnitt aufweisen.

Vorzugsweise sind mehrere Abscheideelemente 418 versetzt zueinander und/oder ineinander geschachtelt angeordnet, insbesondere um die einfache oder mehrfache Strömungsumlenkung zu realisieren.

Die Vorabscheidevorrichtung 412 ist vorzugsweise wahlweise und/oder bei Bedarf an einem Filtermodul 122 anordenbar.

Beispielsweise kann die Vorabscheidevorrichtung 412 als Ganzes vor einer Hauptfiltervorrichtung 188 eines Filtermoduls 122 angeordnet werden.

Die Vorabscheidevorrichtung 412 erstreckt sich dabei vorzugsweise über die gesamte Eintrittsfläche der Hauptfiltervorrichtung 188 hinweg.

Die Vorabscheidevorrichtung 412 ist vorzugsweise oberhalb, insbesondere direkt über, einer als Auffangelement 196 dienenden Wanne 198 des Filtermoduls 122 angeordnet. Auf diese Weise kann von der Vorabscheidevorrichtung 412 herabtropfende Flüssigkeit einfach aufgefangen und gesammelt werden.

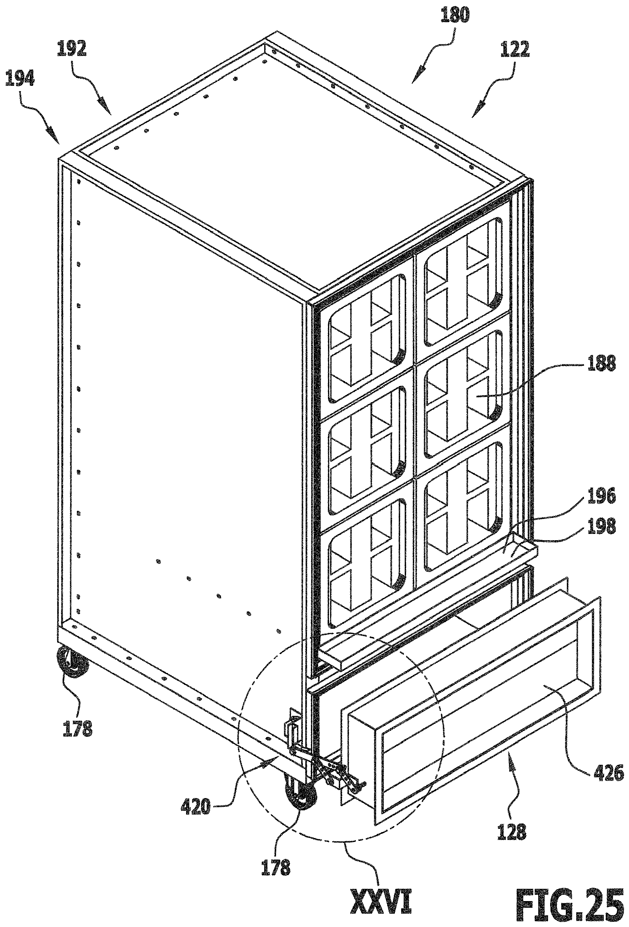

Bei der in den Fig. 25 bis 28 dargestellten Ausführungsform eines Filtermoduls 122 und einer zugehörigen Filtermodulaufnahme 120 ist eine Betätigungsvorrichtung 420 vorgesehen, mittels welcher die Ventilvorrichtung 128 betätigbar ist.

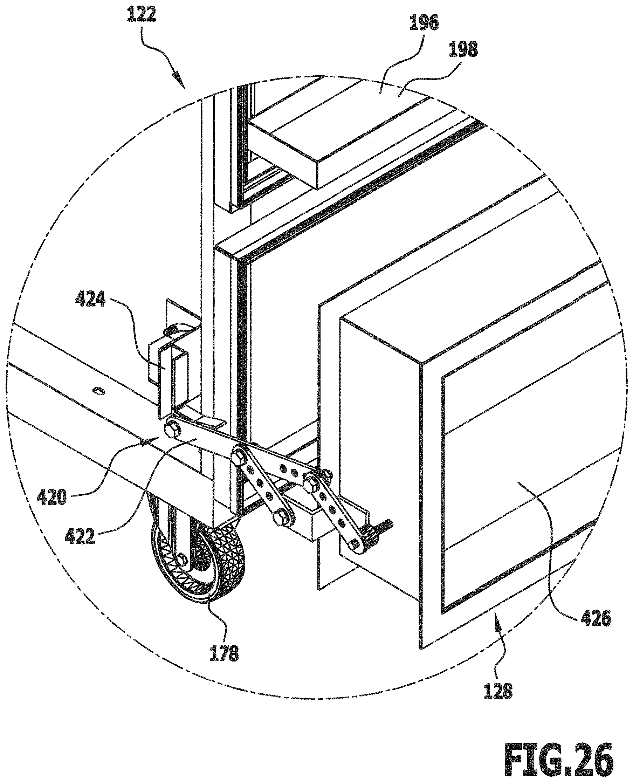

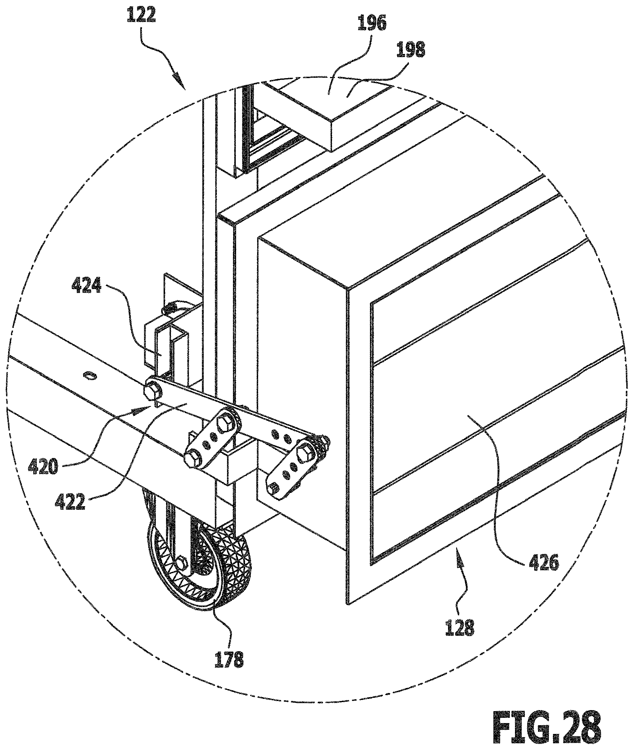

Wie insbesondere aus einem Vergleich der Fig. 26 und 28 hervorgeht, ist die Betätigungsvorrichtung 420 insbesondere mechanisch dadurch betätigbar, dass das Filtermodul 122 an die Ventilvorrichtung 128 angedrückt wird.

Die Betätigungsvorrichtung 420 umfasst dabei insbesondere einen Betätigungshebel 422, welcher mit einem Anschlag 424 der Betätigungsvorrichtung 420 in Eingriff bringbar ist (siehe die Fig. 26 und 28).

Der Betätigungshebel 422 ist insbesondere mit einer oder mehreren Klappenelementen 426 der Ventilvorrichtung 128 gekoppelt, so dass durch eine Bewegung des Betätigungshebels 422 die Klappenelemente 426 von einer Offenstellung in eine Schließstellung bzw. von einer Schließstellung in eine Offenstellung bringbar sind.

Der Betätigungshebel 422 kann beispielsweise federbeaufschlagt sein, so dass die Klappenelemente 426 ohne eine Krafteinwirkung auf den Betätigungshebel 422 mittels des Anschlags 424 automatisch in die in den Fig. 25 und 26 dargestellte Schließstellung gebracht werden.

Der Anschlag 424 der Betätigungsvorrichtung 420 ist insbesondere ein seitlicher Vorsprung des Filtermoduls 122.

Die Betätigungsvorrichtung 420 ist insbesondere eine Betätigungsvorrichtung 420, mittels welcher die Ventilvorrichtung 128 automatisch dann geöffnet wird, wenn das Filtermodul 122 in einer vorgegebenen Position an einer Filtermodulaufnahme 120 angeordnet wird. Wenn das Filtermodul 122 von der Filtermodulaufnahme 120 entfernt wird, wird die Ventilvorrichtung 128 vorzugsweise automatisch geschlossen.

Bevorzugte Ausführungsformen sind die folgenden:
1. Filteranlage (112) zum Abscheiden von Verunreinigungen aus einem Verunreinigungen enthaltenden Rohgasstrom, umfassend eine Grundkonstruktion (116), durch welche der Rohgasstrom hindurchführbar ist und welche mindestens eine Filtermodulaufnahme (120) zur Aufnahme mindestens eines Filtermoduls (122) umfasst, und mindestens ein Filtermodul (122), welches wahlweise an und/oder in der mindestens einen Filtermodulaufnahme (120) anordenbar oder von und/oder aus derselben entfernbar ist, wobei das mindestens eine Filtermodul (122) mehrere Filterelementaufnahmen (184) zur Aufnahme mehrerer voneinander unabhängiger Filterelemente (182) umfasst.
2. Filteranlage (112) nach Ausführungsform 1, dadurch gekennzeichnet, dass mehrere Filterelemente (182) Bestandteil einer Filtervorrichtung (118) des Filtermoduls (122) sind und in einem Filterbetrieb der Filteranlage (112) parallel zueinander mit dem zu reinigenden Rohgasstrom durchströmbar sind.
3. Filteranlage (112) nach einer der Ausführungsformen 1 oder 2, dadurch gekennzeichnet, dass das mindestens eine Filtermodul (122) mehrere Filtervorrichtungen (118) umfasst, welche in einem Filterbetrieb der Filteranlage (112) nacheinander mit dem zu reinigenden Rohgasstrom durchströmbar sind.
4. Filteranlage (112) nach einer der Ausführungsformen 1 bis 3, dadurch gekennzeichnet, dass das mindestens eine Filtermodul (122) eine Vorfiltervorrichtung (186), eine Hauptfiltervorrichtung (188) und/oder eine Nachfiltervorrichtung (190) umfasst, welche in einem Filterbetrieb der Filteranlage (112) mit zumindest einem Teilstrom des Rohgasstroms nacheinander durchströmbar sind.
5. Filteranlage (112) nach einer der Ausführungsformen 1 bis 4, dadurch gekennzeichnet, dass das mindestens eine Filtermodul (122) als ein verfahrbarer oder verschiebbarer Transportwagen (180) ausgebildet ist.
6. Filteranlage (112) nach einer der Ausführungsformen 1 bis 5, dadurch gekennzeichnet, dass das mindestens eine Filtermodul (122) und/oder die mindestens eine Filtermodulaufnahme (120) eine Führungsvorrichtung (168) zum Führen, Bewegen und/oder Arretieren des mindestens einen Filtermoduls (122) relativ zu der mindestens einen Filtermodulaufnahme (120) umfasst.
7. Filteranlage (112) nach einer der Ausführungsformen 1 bis 6, dadurch gekennzeichnet, dass die Grundkonstruktion (116) mindestens eine verschließbare Zugangsöffnung (146) umfasst, durch welche ein Innenraum (126) der mindestens einen Filtermodulaufnahme (120) zum Einbringen und/oder zum Entfernen des mindestens einen Filtermoduls (122) von außerhalb der Filteranlage (112) zugänglich ist.
8. Filteranlage (112) nach einer der Ausführungsformen 1 bis 7, dadurch gekennzeichnet, dass die mindestens eine Filtermodulaufnahme (120) mindestens eine Ventilvorrichtung (128) zum wahlweisen Öffnen oder Schließen einer Einlassöffnung (134) der Filtermodulaufnahme (120), durch welche zumindest ein Teil des Rohgasstroms der Filtermodulaufnahme (120) zuführbar ist, und/oder einer Auslassöffnung (144) der Filtermodulaufnahme (120), durch welche ein Gasstrom aus der Filtermodulaufnahme (120) abführbar ist, umfasst.
9. Filteranlage (112) nach einer der Ausführungsformen 1 bis 8, dadurch gekennzeichnet, dass die Filteranlage (112) mehrere bezüglich einer vertikalen Längsmittelebene (124) der Filteranlage (112) einander gegenüberliegend angeordnete Filtermodulaufnahmen (120) und/oder mehrere in einer Längsrichtung (110) der Filteranlage (112) aufeinanderfolgend angeordnete Filtermodulaufnahmen (120) umfasst.
10. Filteranlage (112) nach einer der Ausführungsformen 1 bis 9, dadurch gekennzeichnet, dass die Filteranlage (112) mehrere Filtermodulaufnahmen (120) umfasst, welche unabhängig voneinander durchströmbare Strömungskanäle (130) der Filteranlage (112) bilden, wobei mittels Ventilvorrichtungen (128) der Filteranlage (112) einzelne oder mehrere Strömungskanäle (130) sperrbar oder freigebbar sind.
11. Filteranlage (112) nach einer der Ausführungsformen 1 bis 10, dadurch gekennzeichnet, dass die Filteranlage (112) mindestens einen sich zwischen mindestens zwei Filtermodulaufnahmen (120) erstreckenden Rohgasschacht (142) umfasst, durch welchen der Rohgasstrom hindurchführbar und Einlassöffnungen (134) der Filtermodulaufnahmen (120) zuführbar ist.
12. Filteranlage (112) nach einer der Ausführungsformen 1 bis 11, dadurch gekennzeichnet, dass die Filteranlage (112) mindestens einen sich zwischen mindestens zwei Filtermodulaufnahmen (120) erstreckenden Reingaskanal (160) umfasst, durch welchen ein Reingasstrom, der durch Abscheiden der Verunreinigungen aus dem Rohgasstrom erhältlich ist, abführbar ist.
13. Filteranlage (112) nach einer der Ausführungsformen 1 bis 12, dadurch gekennzeichnet, dass mindestens eine Filtermodulaufnahme (120) an einer Außenwandung (150) der Grundkonstruktion (116) angeordnet und/oder in die Außenwandung (150) der Grundkonstruktion (116) integriert ist und dass mindestens ein Filtermodul (122) durch Anlegen desselben an die Außenwandung (150) an der mindestens einen Filtermodulaufnahme (120) anordenbar ist.
14. Filteranlage (112) zum Abscheiden von Verunreinigungen aus einem Verunreinigungen enthaltenden Rohgasstrom, insbesondere nach einer der Ausführungsformen 1 bis 13, umfassend mindestens eine Filterelementaufnahme (184) zur Aufnahme mindestens eines Filterelements (182) und mindestens eine Wechselvorrichtung (208) zum automatischen Austausch eines in der mindestens einen Filterelementaufnahme (184) angeordneten stärker verunreinigten Filterelements (182) gegen ein weniger stark verunreinigtes Filterelement (182).
15. Filteranlage (112) zum Abscheiden von Verunreinigungen aus einem Verunreinigungen enthaltenden Rohgasstrom, insbesondere nach einer der Ausführungsformen 1 bis 14, umfassend:
   - eine Grundkonstruktion (116), durch welche der Rohgasstrom hindurchführbar ist; und
   - eine Feuerschutzvorrichtung (300), mittels welcher ein Brand in der Filteranlage (112) verhinderbar, eindämmbar und/oder löschbar ist, wobei die Feuerschutzvorrichtung (300) ein oder mehrere Feuerschutzelemente (302) zur Beeinflussung einer Flammenausbreitung umfasst.
16. Filteranlage (112) nach Ausführungsform 15, dadurch gekennzeichnet, dass die Feuerschutzvorrichtung (300) ein oder mehrere Feuerschutzelemente (302) umfasst, welche im Brandfall betätigbar sind.
17. Filteranlage (112) nach einer der Ausführungsformen 15 oder 16, dadurch gekennzeichnet, dass ein oder mehrere Feuerschutzelemente (302) ein brandhemmendes Material umfassen oder aus einem brandhemmenden Material gebildet sind.
18. Filteranlage (112) nach einer der Ausführungsformen 15 bis 17, dadurch gekennzeichnet, dass ein oder mehrere Feuerschutzelemente (302) ein Material umfassen oder aus einem Material gebildet sind, welches durch Einwirkung von Wärme und/oder durch Kontakt mit einem Reaktionsstoff auflösbar, verflüssigbar und/oder verbrennbar ist.
19. Filteranlage (112) nach Ausführungsform 18, dadurch gekennzeichnet, dass das eine oder die mehreren Feuerschutzelemente (302) in einer Ausgangsposition an einer oder mehreren Aufnahmen (314) für ein oder mehrere Feuerschutzelemente (302) angeordnet sind und dass das Material des einen oder der mehreren Feuerschutzelemente (302) im Vergleich zu einem Material der einen oder der mehreren Aufnahmen (314) einen geringeren Schmelzpunkt, eine geringere Feuerfestigkeit und/oder eine geringere chemische und/oder physikalische Beständigkeit aufweist.
20. Filteranlage (112) nach einer der Ausführungsformen 15 bis 19, dadurch gekennzeichnet, dass mittels eines oder mehrerer Feuerschutzelemente (302) bei einem Brand eine oder mehrere Löschöffnungen (304) der Filteranlage (112) freigebbar sind.
21. Filteranlage (112) nach Ausführungsform 20, dadurch gekennzeichnet, dass die eine oder die mehreren Löschöffnungen (304) der Filteranlage (112) Ausnehmungen oder Aussparungen in einer oder mehreren Wandungen (308, 322, 324) der Filteranlage (112) sind, welche in einem Normalbetrieb der Filteranlage (112) mittels eines oder mehrerer Feuerschutzelemente (302) verschlossen sind.
22. Filteranlage (112) nach einer der Ausführungsformen 15 bis 21, dadurch gekennzeichnet, dass die Filteranlage (112) ein oder mehrere Filterelemente (182) und/oder ein oder mehrere Filtermodule (122) umfasst, deren Innenraum (248) bei einem Brand durch Entfernen eines oder mehrerer Feuerschutzelemente (302) von außen zugänglich ist.
23. Filteranlage (112) nach einer der Ausführungsformen 15 bis 22, dadurch gekennzeichnet, dass die Feuerschutzvorrichtung (300) eine Applikationsvorrichtung (306) umfasst, mittels welcher ein Löschmaterial und/oder ein Reaktionsstoff abgebbar ist.
24. Filteranlage (112) nach Ausführungsform 23, dadurch gekennzeichnet, dass mittels der Applikationsvorrichtung (306) ein Löschmaterial und/oder ein Reaktionsstoff auf ein oder mehrere Feuerschutzelemente (302) abgebbar ist.
25. Filteranlage (112) nach einer der Ausführungsformen 23 oder 24, dadurch gekennzeichnet, dass bei einem Brand mittels der Applikationsvorrichtung (306) Löschmaterial und/oder Reaktionsstoff durch eine oder mehrere Löschöffnungen (304) der Filteranlage (112) hindurch in einen Innenraum (142, 248) der Filteranlage (112) abgebbar ist.
26. Filteranlage (112) nach einer der Ausführungsformen 23 bis 25, dadurch gekennzeichnet, dass die Applikationsvorrichtung (306) außerhalb eines Innenraums (142, 248) der Filteranlage (112), insbesondere außerhalb eines Rohgasraums (312) der Filteranlage (112) und/oder außerhalb eines Reingasraums der Filteranlage (112), angeordnet ist.
27. Filteranlage (112) nach einer der Ausführungsformen 15 bis 26, dadurch gekennzeichnet, dass die Filteranlage (112) ein oder mehrere Filtermodule (122) umfasst, welche als verfahrbare oder verschiebbare Transportwagen (180) ausgebildet sind, wobei eine Wandung (308, 322, 324) des einen oder der mehreren Transportwagen (180) ein oder mehrere Löschöffnungen (304) umfasst, welche in einem Normalbetrieb der Filteranlage (112) mittels eines oder mehrerer Feuerschutzelemente (302) verschlossen sind.
28. Filteranlage (112) nach einer der Ausführungsformen 1 bis 27, dadurch gekennzeichnet, dass die Filteranlage (112) ein oder mehrere Filtermodule (122) und einen Sammelkanal (162) umfasst, welchem ein durch Reinigen des Rohgasstroms erhältlicher Reingasstrom aus dem einen oder den mehreren Filtermodulen (122) zuführbar ist, wobei der Sammelkanal (162) oberhalb des einen oder der mehreren Filtermodule (122), insbesondere direkt über dem einen oder den mehreren Filtermodulen (122), angeordnet ist.
29. Filteranlage (112) nach einer der Ausführungsformen 1 bis 28, dadurch gekennzeichnet, dass die Filteranlage (112) ein oder mehrere Filtermodule (122) umfasst, welche eine Vorabscheidevorrichtung (412) umfassen, wobei die Vorabscheidevorrichtung (412) bedarfsweise an dem Filtermodul (122) anordenbar ist und/oder wobei die Vorabscheidevorrichtung (412) ein Trägheitsfilter (416) oder Labyrinthfilter (414) umfasst.
30. Lackieranlage (100) zum Lackieren von Werkstücken (102), insbesondere Fahrzeugkarosserien (104), umfassend mindestens eine Filteranlage (112) nach einer der Ausführungsformen 1 bis 29.
31. Verfahren zum Abscheiden von Verunreinigungen aus einem Verunreinigungen enthaltenden Rohgasstrom mittels einer Filteranlage (112), umfassend:
   - Zuführen des Rohgasstroms zu mehreren Filterelementen (182), die in Filterelementaufnahmen (184) eines Filtermoduls (122) angeordnet sind, wobei das Filtermodul (122) an und/oder in einer Filtermodulaufnahme (120) der Filteranlage (112) angeordnet ist;
   - Abscheiden von Verunreinigungen aus dem Rohgasstrom an den Filterelementen (182);
   - Entfernen des Filtermoduls (122) von und/oder aus der Filtermodulaufnahme (120);
   - Austauschen eines oder mehrerer der in den Filterelementaufnahmen (184) angeordneten stärker verunreinigten Filterelemente (182) gegen ein oder mehrere weniger stark verunreinigte Filterelemente (182);
   - Anordnen des Filtermoduls (122) an und/oder in der Filtermodulaufnahme (120).
32. Verfahren zum Abscheiden von Verunreinigungen aus einem Verunreinigungen enthaltenden Rohgasstrom, insbesondere nach Ausführungsform 31, umfassend:
   - Zuführen des Rohgasstroms zu mindestens einem Filterelement (182);
   - Abscheiden von Verunreinigungen aus dem Rohgasstrom an dem mindestens einen Filterelement (182), wodurch das mindestens eine Filterelement (182) verunreinigt wird;
   - Austauschen des mindestens einen verunreinigten Filterelements (182) gegen ein frisches Filterelement (182) mittels einer automatischen Wechselvorrichtung (208).
33. Verfahren zum Betreiben einer Filteranlage (112) zum Abscheiden von Verunreinigungen aus einem Verunreinigungen enthaltenden Rohgasstrom, insbesondere einer Filteranlage (112) nach einer der Ausführungsformen 1 bis 29, umfassend:
   Aktivieren einer Feuerschutzvorrichtung (300) zum Verhindern, Eindämmen und/oder Löschen eines Brands in der Filteranlage (112), wobei mittels eines oder mehrerer Feuerschutzelemente (302) der Feuerschutzvorrichtung (300) eine Flammenausbreitung beeinflusst wird.
34. Verfahren nach Ausführungsform 33, dadurch gekennzeichnet, dass mittels eines oder mehrerer Feuerschutzelemente (302) bei einem Brand eine oder mehrere Löschöffnungen (304) der Filteranlage (112) freigegeben werden.

## Patentansprüche

1. Filteranlage (112) zum Abscheiden von Verunreinigungen aus einem Verunreinigungen enthaltenden Rohgasstrom, umfassend eine Grundkonstruktion (116), durch welche der Rohgasstrom hindurchführbar ist und welche mindestens eine Filtermodulaufnahme (120) zur Aufnahme mindestens eines Filtermoduls (122) umfasst, und mindestens ein Filtermodul (122), welches wahlweise an und/oder in der mindestens einen Filtermodulaufnahme (120) anordenbar oder von und/oder aus derselben entfernbar ist,
wobei das mindestens eine Filtermodul (122) mehrere Filterelementaufnahmen (184) zur Aufnahme mehrerer voneinander unabhängiger Filterelemente (182) umfasst, wobei das mindestens eine Filtermodul (122) als ein verfahrbarer oder verschiebbarer Transportwagen (180) ausgebildet ist und wobei die Grundkonstruktion (116) mindestens eine verschließbare Zugangsöffnung (146) umfasst, durch welche ein Innenraum (126) der mindestens einen Filtermodulaufnahme (120) zum Einbringen und/oder zum Entfernen des mindestens einen Filtermoduls (122) von außerhalb der Filteranlage (112) zugänglich ist.

2. Filteranlage (112) nach Anspruch 1, **dadurch gekennzeichnet, dass** die Zugangsöffnung (146) in einer Außenwandung (150) der Filteranlage (112) angeordnet ist.

3. Filteranlage (112) nach einem der Ansprüche 1 oder 2, **dadurch gekennzeichnet, dass** jeder Filtermodulaufnahme (120) eine Zugangsöffnung (146) zugeordnet ist.

4. Filteranlage (112) nach einem der Ansprüche 1 bis 3, **dadurch gekennzeichnet, dass** jeder Filtermodulaufnahme (120) eine separate Zugangsöffnung (146) zugeordnet ist.

5. Filteranlage (112) nach einem der Ansprüche 1 bis 4, **dadurch gekennzeichnet, dass** die Zugangsöffnung (146) eine verschließbare Türe (148) ist.

6. Filteranlage (112) nach einem der Ansprüche 1 bis 5, **dadurch gekennzeichnet, dass** jede Filtermodulaufnahme (120) der Aufnahme eines einzigen Filtermoduls (122) dient.

7. Filteranlage (112) nach einem der Ansprüche 1 bis 6, **dadurch gekennzeichnet, dass** das mindestens eine Filtermodul (122) mehrere Filtervorrichtungen (118) umfasst, welche in einem Filterbetrieb der Filteranlage (112) nacheinander mit dem zu reinigenden Rohgasstrom durchströmbar sind.

8. Filteranlage (112) nach einem der Ansprüche 1 bis 7, **dadurch gekennzeichnet, dass** das mindestens eine Filtermodul (122) eine Vorfiltervorrichtung (186), eine Hauptfiltervorrichtung (188) und/oder eine Nachfiltervorrichtung (190) umfasst, welche in einem Filterbetrieb der Filteranlage (112) mit zumindest einem Teilstrom des Rohgasstroms nacheinander durchströmbar sind.

9. Filteranlage (112) nach einem der Ansprüche 1 bis 8, **dadurch gekennzeichnet, dass** das mindestens eine Filtermodul (122) und/oder die mindestens eine Filtermodulaufnahme (120) eine Führungsvorrichtung (168) zum Führen, Bewegen und/oder Arretieren des mindestens einen Filtermoduls (122) relativ zu der mindestens einen Filtermodulaufnahme (120) umfasst.

10. Filteranlage (112) nach Anspruch 9, **dadurch gekennzeichnet, dass** mittels der Führungsvorrichtung (168) das mindestens eine Filtermodul (122) von einer Filterstellung in eine Wechselstellung und/oder aus der Wechselstellung in die Filterstellung bringbar ist.

11. Filteranlage (112) nach einem der Ansprüche 9 oder 10, **dadurch gekennzeichnet, dass** das eine oder die mehreren Filtermodule (122) abgesehen von der Möglichkeit der Bewegung mittels der Führungsvorrichtung (168) auch mittels einer separaten Transportvorrichtung (204) bewegbar sind.

12. Filteranlage (112) nach einem der Ansprüche 1 bis 11, **dadurch gekennzeichnet, dass** zum Transport eines oder mehrerer Filtermodule (122) eine Transportvorrichtung (204) vorgesehen ist, welche insbesondere als eine Hubwagenvorrichtung (206) ausgebildet ist.

13. Filteranlage (112) nach einem der Ansprüche 1 bis 12, **dadurch gekennzeichnet, dass** mittels einer Transportvorrichtung (204) das mindestens eine Filtermodul (122) an derjenigen Position, an welcher es sich in einer Wechselstellung befindet, aufnehmbar und abtransportierbar ist.

14. Filteranlage (112) nach einem der Ansprüche 1 bis 13 **dadurch gekennzeichnet, dass** mindestens ein Filtermodul (122) mittels einer Transportvorrichtung (204) zu der Filteranlage (112) hintransportierbar ist, insbesondere derart, dass ein hintransportiertes Filtermodul (122) in eine Wechselstellung bringbar ist.

15. Lackieranlage (100) zum Lackieren von Werkstücken (102), insbesondere Fahrzeugkarosserien (104), umfassend mindestens eine Filteranlage (112) nach einem der Ansprüche 1 bis 14.
